(19) Europäisches Patentamt
European Patent Office
Office européen des brevets

(11) **EP 4 793 762 A1**

(12) **EUROPEAN PATENT APPLICATION**

(43) Date of publication:
**19.08.2026 Bulletin 2026/34**

(21) Application number: **26158093.0**

(22) Date of filing: **12.02.2026**

(51) International Patent Classification (IPC):
***G06F 8/65*** *(2018.01)* ***G06F 21/57*** *(2013.01)*
***H04L 9/40*** *(2022.01)*

(52) Cooperative Patent Classification (CPC):
**H04L 63/1433; G06F 8/65; G06F 8/71; G06F 21/577;** G06F 2221/033

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **13.02.2025 US 202563757955 P**
**09.02.2026 US 202619533839**

(71) Applicant: **Dynatrace LLC**
**Boston, Massachusetts 02210 (US)**

(72) Inventors:
- **ACHLEITNER, Stefan**
  **Linz (AT)**
- **ALIYEV, Yalchin**
  **Linz (AT)**

(74) Representative: **Steffens, Adrian**
**Boehmert & Boehmert Anwaltspartnerschaft mbB**
**Pettenkoferstraße 22**
**80336 München (DE)**

(54) **GENERATION AND USAGE OF INTEGRATED VULNERABILITY INTELLIGENCE DATA CONSIDERING PRODUCT SPECIFIC BACKPORTED VULNERABILITY FIXES**

(57) Technologies are disclosed herein that are directed to the improvement of vulnerability assessment process by avoiding false positive vulnerabilities caused by vendor specific backports of vulnerability fixes that are not considered by conventional vulnerability assessment systems. To secure their software products, vendors identify components that are affected by vulnerabilities used by their products and apply vulnerability fixes introduced by later component versions to those component versions used in their products. This created "gaps" in vulnerable component version ranges provided by public vulnerability intelligence data streams. Vulnerability assessment processes that solely rely on public vulnerability intelligence data incorrectly report vulnerabilities for component versions containing such backported vulnerability fixes. An integrated vulnerability intelligence database that combines public vulnerability intelligence data with vendor specific vulnerability backport data provides a more complete basis for vulnerability assessments that are not prone to fix backport caused false positives.

FIG. 1A System Overview - Prior Art
Component Developer
Component Maintenance Stream
Component Update
ID/Name
Version
Vulnerability fixing (intentionally)
Component Update
ID/Name
Version
Vulnerability introducing (unintentionally)
Component Repository
Component
ID/Name
Version
Vulnerability Data Provider
Analyzes component version updates, identifies vulnerabilities and affected version ranges, creates corresponding vulnerability records
Public Vulnerability Repository
Vulnerability Record
ID/Name
Affected Component Id
Affected Version Range
Receive vulnerability intelligence data
Security Status Monitoring system
Vulnerability reports including false positives due to missing backport intelligence data
Vulnerability reports
1) Selects and fetches required components
2) Identifies vulnerabilities of selected components
Update Bundle Provider
Product Vendor/Product Update Bundle Provider
3) Backports fixes for identified vulnerabilities, creates update bundle
Performs vulnerability analysis based on public vulnerability data alone
Update Bundle
Bundle Id
Target Products
Product ID
Fixed Vulnerabilities
Vulnerability ID
Contained Components
Component Reference
ID/Name
Version + opt. Backport Fix Indicator
Receipt and installation of update bundle
Monitored System based on Product receiving Update Bundles
100
101
102
103
105
106
107
108
110
111
112
113
114
115
116
120
121
122
123
124
125
126
127
128
129
130
131
132
133
134
140
141
150
151
152
153
154
155



Processed by Luminess, 75001 PARIS (FR)

(Cont. next page)

FIG. 1B System Overview - Using Fix Backport Intelligence Data

Component Developer
Component Maintenance Stream
Component Update
ID/Name
Version
Vulnerability fixing (intentionally)
Vulnerability introducing (unintentionally)
Component Repository
Component
Vulnerability Data Provider
Analyzes component version updates, identifies vulnerabilities and affected version ranges, creates corresponding vulnerability records
Public Vulnerability Repository
Vulnerability
Affected Component Id
Affected Version Range
Receive public vulnerability intelligence data
Security Status Monitoring system
Vulnerability reports considering backport intelligence data
Vulnerability reports
1) Selects and fetches required components
2) Identifies vulnerabilities of selected
Update Bundle Provider
Product Vendor/Product Update Bundle Provider
3) Backports fixes for identified vulnerabilities, creates update bundle
Receive update bundles, extract vulnerability backport data and integrate with public vulnerability data
Performs vulnerability analysis based on integrated public and backport vulnerability data
Update Bundle
Bundle Id
Target Products
Product ID
Fixed Vulnerabilities
Vulnerability ID
Contained Components
Component Reference
Version + opt. Backport Fix Indicator
Receipt and installation of update bundle
Monitored System based on Product receiving Update Bundles

**Description**

Field

The present disclosure generally relates to the generation and usage of vulnerability intelligence data to identify and report software components that are affected by vulnerabilities, and more specifically to the integration of vulnerability intelligence data generated from generic, publicly available vulnerability report data with data describing proprietary, product specific security status data, like data describing backported security or vulnerability fixes, to improve the accuracy of reported vulnerabilities.

Background

Large and complex software products, like operating systems, application servers and the like typically rely on large sets of software components or libraries that provide basic functionality which is required by those software products. Some of those components/libraries are developed and maintained in form of open-source projects, and others are provided as proprietary, closed source offerings.
Both software products and components/libraries are developed in an iterative, version-oriented way, where each increment of a product or component is assigned a new version number. Management and assignment of version numbers to products and components typically follows the "semantic versioning" specification, or a versioning scheme that is aligned to or derived from this versioning specification. The "semantic versioning" specification subdivides a version number into the four mandatory numeric sections "MAJOR", "MINOR", and "PATCH" followed by an optional alphanumeric label for pre-release and patch identifier section. The numeric sections have a decreasing significance according to their sequence; therefore "MAJOR" has the highest significance and "PATCH" the lowest. The versioning scheme provides an order relation between different version numbers defining which one of two version numbers is earlier and which one is later. As an example, version 1.2.3 is earlier than version 2.0.0. Typically, a new version of a product or component provides more functionality than the older one, fixes software bugs that affected the earlier version or is implemented more efficiently than the earlier version.
Next to version numbers, which document and describe the chronological development of software products or components, those products and components have identifiers or names which identify them independently of their version. Such identifiers may also follow different structures and schemes and include data identifying the vendor of the product or component itself, an identifier for the product or component, data specifying usage restrictions for the product or component, like e.g., a hardware architecture for which the product or component is built.
Both individual components/libraries and complex software products are continuously updated and developed, to improve and extend functionality, enhance performance, and to fix software bugs and vulnerabilities.
For the release of large and complex software products which depend on and include multiple components, a specific set of those components, each having a specific version, is used and "frozen" (i.e., no version update is performed) during intensive integration and testing activities, which are required to create a fully functional and reliable software product, in which all included components and library operate and interact as desired. After this integration and testing process, the product is released (with an updated product version) for public use. Updating individual software components of an already released product, without repeating at least a portion of the integration and testing process, is extremely risky and is therefore avoided or even not provided by software product vendors.
Individual components/libraries, as well as complex software products are constantly monitored for vulnerabilities, by various public/governmental and private organizations that provide detailed intelligence data for identified vulnerabilities.
A prominent example for public/governmental provide vulnerability intelligence data is the National Vulnerability Database (NVD), hosted and maintained by the U.S. National Institute of Standards and Technology (NIST), which provides vulnerability intelligence in form of Common Vulnerability and Exposure (CVE) records, where a CVE record contains and describes various aspects of a found vulnerability, including an identifier of an affected component/library or software product, a version range, specifying the versions of the product that are affected by the vulnerability, typically indicated by a start or from version, identifying the version by which the vulnerability was introduced and an up to or end version, identifying a later version which introduced a fix for the vulnerability, and a unique identifier for the vulnerability.
The NVD and the CVEs stored therein provide a "de facto" standard for vulnerability intelligence data, which is used by private/commercial organizations as basis for further analyses and the generation of specialized, higher-quality vulnerability intelligence data. One example of such an organization is the company "Snyk", which provides the "Snyk Security Database".
Vulnerability assessment activities, which are performed either manual or in an automated fashion, typically determine, for installed/operating software components/libraries their component/library identification data and the version information of the installed component/library. This information is then used to query vulnerability intelligence

data repositories, like the NVD or the Snyk Security Database, for vulnerabilities that affect the identified component/library for a version range into which the version of the actual installed/operating component/library falls. If a matching vulnerability intelligence record is found, then the installed component/library is reported as vulnerable, and the affected component/library may be updated to a version that is no longer affected by the vulnerability.

If a new vulnerability is identified for a software component/library in a version that is also contained in a complex software product, then updating the component/library to a version that is not affected by the vulnerability is often not an option due to interdependencies/interactions of the affected component with other components contained in the complex software product, and a sole update of one individual component/library may cause undesired side effects.

Therefore, vendors of complex software products use so called backported vulnerability fixes for components/libraries that are used in already released versions of complex software products. For a backported vulnerability fix, a base version of a component/library that is affected by a vulnerability is selected, then code that fixes the vulnerability is either specifically developed or extracted from a later version of the component/library that fixes the vulnerability, and then the code of the component/library of the base version is enriched with this fix code. The result of this enrichment is a new version of the component/library with the exact same functionality and behavior as the base version of the component/library which is no longer affected by the vulnerability due to the added fix code. A new, backport-fix version is assigned to the updated component/library, which is derived from the version number of the base version. Typically, an indicator for an incorporated fix is appended to the standard components of the base version. As an example, if the base version of the component/library "A" was 1.2.3, then the version containing the back ported fix could be 1.2.3_backport_fix_vulnerabilty_x, indicating that this is a version of the component/library which is based on the released version 1.2.3, which includes a fix for vulnerability x.

Those component/libraries containing backported vulnerability fixes are then published by the vendor of the complex software product together with data describing including fixes, targeted product versions and instructions describing how to install those updates.

Customers using complex software products may review those instructions and install those fixes on respective complex software products they are using to improve their security posture.

If those customers also perform manual or automated vulnerability scans that are solely based on publicly available vulnerability intelligence data (i.e., CVE records provided by the NVD or enhanced vulnerability intelligence data provided by a private vendor like Snyk), which is based on identification data for an affected component or library, and data describing a version range for versions of the component or library that is affected by a reported vulnerability, then the installation of such fix backports has also the undesired effect of increasing the number of false positive vulnerability alerts, as version numbers of components/libraries containing backported fixes also fall into the vulnerable version range. More specifically, and by continuing above example, a vulnerability "X" may be indicated by public/generic vulnerability intelligence data for component/library "A" for the version range from 1.2.0 to 1.3.1. The version of the component "A" containing the backported fix for vulnerability "X" is "1.2.3_backport_fix_vulnerability_x", which still falls into the reported vulnerability range from 1.2.0 to 1.3.1, and therefore this component/library which is not affected by vulnerability "X" due to the backported fix may still be reported as vulnerable if an assessment is performed solely on publicly available/generic vulnerability intelligence data.

Consequently, a method and system are required in the field that considers data describing fix-backports provided by product vendors for vulnerability assessments to reduce the number of reported vulnerabilities that are false positives.

This section provides background information related to the present disclosure which is not necessarily prior art.

<u>Summary</u>

As a solution, computer-implemented methods are provided according to the independent claims.

According to an aspect of the invention, a computer-implemented method for identifying software components affected by a vulnerability comprises:

- receiving, by a computer processor, a listing of publicly known vulnerabilities from a vulnerability database, where each entry in the listing of publicly known vulnerabilities identifies a known vulnerability, identifies a software component affected by the known vulnerability and identifies a range of versions of the software component affected by the known vulnerability;
- creating an integrated repository of vulnerabilities from the listing of publicly known vulnerabilities;
- receiving, by the computer processor, update data for a computer system, where the update data includes a listing of fixed vulnerabilities fixed by an update and a listing of updated software components, where each entry in the listing of updated software components identifies an updated software component and a version for the updated software component;
- for each updated software component in the listing of updated software components, determining, by the computer

processor, whether a given updated software component resides in the listing of publicly known vulnerabilities and updating a listing of fixed versions for the given software component in the integrated repository of vulnerabilities, where the updating of the listing of fixed versions is in response to the given updated software component residing in the listing of publicly known vulnerabilities;

- receiving, by the computer processor, usage data for a particular software component installed on the computer system, where the usage data includes an identifier for the particular software component and a version for the particular software component;
- determining, by the computer processor, whether the particular software component is affected by a vulnerability using the integrated repository of vulnerabilities; and
- reporting, by the computer processor, a vulnerability for the particular software component in response to the version for the particular software component falls in the range of versions of the software component affected by the known vulnerability but is absent from the listing of fixed versions for the given software component in the integrated repository of vulnerabilities.

The method may further comprise: reporting the vulnerability for the particular software component has been fixed in response to the version of the particular software component falling the range of versions of the software component affected by the known vulnerability and, preferably, the version of the particular software component resides on the listing of fixed version for the given software component in the integrated repository of vulnerabilities.

The usage data may further include an identifier for a software entity using the particular software component.

The method may further comprise receiving, by the computer processor, install binaries for updating the computer system; and/or extracting, by the computer processor, the update data from the install binaries.

The method may further comprise receiving, by the computer processor, a software package for installation on a computer system; and/or extracting, by the computer processor, the update data for a particular software component from the software package.

Determining whether a given updated software component resides in the listing of publicly known vulnerabilities may include creating a mapping between fixed vulnerabilities in the listing of vulnerabilities and/or updated software components in the listing of updated software components.

The method may further comprise filtering the listing of updated software components to include (only) updated software components that fixes a vulnerability, preferably wherein the filtering of the listing of updated software components occurs prior to determining whether a given updated software component resides in the listing of publicly known vulnerabilities.

The version for the particular software component may include at least one of or each of a major version, a minor version, and a patch version, preferably each separated by a delimiter.

Each entry in the listing of fixed versions of software components may include at least one or each of of a major version, a minor version, and a patch version, preferably each separated by a delimiter.

Receiving update data for a computer system may include retrieving a version extraction rule from a rule repository and/or extracting at least one of or each of a base version, a vendor identifier, and a fix revision number for the particular software component in accordance with the version extraction rule, preferably where the version extraction rule is retrieved according to an identifier for software vendor of the updated software component.

Reporting a vulnerability for the particular software component may further comprise identifying a fixed version for which an extracted base version and a vendor identifier match the extracted base version and the vendor identifier of the version of the particular software component; and/or indicating that the version of the particular software component as not absent in response to the extracted fix revision number from the fixed version being smaller than the extracted fix revision number from the version of the particular software component.

According to another aspect, a computer-implemented method for identifying software components affected by a vulnerability comprises:

- receiving, by a computer processor, an entry for a particular vulnerability from a vulnerability database, where the entry identifies a known vulnerability, identifies a software component affected by the known vulnerability and identifies a range of versions of the software component affected by the known vulnerability;
- retrieving, by the computer processor, one or more fix bundles from a fix bundle repository using an identifier for the particular vulnerability, where each fix bundle in the one or more fix bundles fixes the particular vulnerability and includes a listing of fixed vulnerabilities fixed by an update and a listing of updated software components, wherein each entry in the listing of updated software components identifies an updated software component and a version for the updated software component;
- for each of the one or more fix bundles, creating, by the computer processor, a mapping between the particular vulnerability in the listing of vulnerabilities and updated software components in the listing of updated software components;

- for each updated software component mapped to the particular vulnerability, updating an integrated repository of vulnerabilities using the mapping, where each entry in the integrated repository of vulnerabilities identifies a known vulnerability, identifies a software component affected by the known vulnerability, identifies a range of versions of the software component affected by the known vulnerability, and identifies fixed versions of the software component;
- receiving, by the computer processor, usage data for a particular software component installed on the computer system, where the usage data includes an identifier for the particular software component and a version for the particular software component;
- determining, by the computer processor, whether the particular software component is affected by a vulnerability using the integrated repository of vulnerabilities; and
- reporting, by the computer processor, a vulnerability for the particular software component in response to the version for the particular software component falls in the range of versions of the software component affected by the known vulnerability but is absent from the listing of fixed versions for the given software component in the integrated repository of vulnerabilities.

The method may further comprise: reporting the vulnerability for the particular software component has been fixed in response to the version of the particular software component falling the range of versions of the software component affected by the known vulnerability and/or the version of the particular software component resides on the listing of fixed version for the given software component in the integrated repository of vulnerabilities.

Updating the integrated repository of vulnerabilities may include querying the integrated repository of vulnerabilities for records matching the particular vulnerability and a given updated software component; and/or creating a new record in the integrated repository of vulnerabilities in absence of records matching the particular vulnerability and a given updated software component; and/or updating a given record in the integrated repository of vulnerabilities in response to the given record matching the particular vulnerability and a given updated software component.

The method may further comprise extracting install binaries from the one or more fix bundles.

The method may further comprise receiving, by the computer processor, a software package for installation on a computer system; and/or extracting, by the computer processor, the update data for a particular software component from the software package.

The method may further comprise filtering the listing of updated software components to include only updated software components that fixes a vulnerability, preferably wherein the filtering of the listing of updated software components occurs prior to creating a mapping.

The version for the updated software component may include at least one of or each of a major version, a minor version, and a patch version, preferably each separated by a delimiter.

Each entry in the listing of fixed versions of software components may include at least one of or each of a major version, a minor version, and a patch version, preferably each separated by a delimiter.

Receiving update data for a computer system may include retrieving a version extraction rule from a rule repository and extracting a base version, a vendor identifier, and a fix revision number for the updated software component in accordance with the version extraction rule, preferably where the version extraction rule is retrieved according to an identified for software vendor of the updated software component.

Reporting a vulnerability for the particular software component may further comprise identifying a fixed version for which an extracted base version and a vendor identifier match the extracted base version and the vendor identifier of the version of the particular software component; and/or indicating that the version of the particular software component as not absent in response to the extracted fix revision number from the fixed version being smaller than the extracted fix revision number from the version of the particular software component.

The technologies disclosed herein aim for a more accurate identification and reporting of software vulnerabilities that are affecting monitored components of an observed environment by considering, next to publicly known and available vulnerability intelligence data provided by dedicated vulnerability analysis organizations, also data describing product maintenance and security update advisory information or product update packages provided by individual product vendors. Those product updates may include or identify individual component versions or revisions, which are flagged as vulnerable by public vulnerability intelligence data, but which were updated by product vendors with a fix for this vulnerability. Security status data, including those fix backports to individual component versions is extracted from vendor specific update package data and integrated with publicly known vulnerability intelligence data to create integrated vulnerability intelligence data which provides the basis for vulnerability assessment processes which are less prone to false positive vulnerability notifications, as they also consider product specific backports of vulnerability fixes.

Some embodiments of the disclosed technologies include processing pipeline systems which ingest and process both public vulnerability intelligence data and vendor specific product update and fix data to create integrated vulnerability intelligence data. Such pipeline systems may include steps to ingest product update packages or bundles identifying updated components and fixed vulnerabilities, steps to isolate and filter component updates that are related to vulnerability fixes, steps to map individual vulnerabilities to individual component updates that fix those vulnerabilities, and steps to

integrate generated vendor specific fix backport information with vulnerability intelligence data derived from public vulnerability intelligence sources. Some variants of those embodiments may use pipeline configurations that are driven by public vulnerability records and use those public records to identify and integrate corresponding vendor specific updates and backports. Those variants may be directed to the onboarding of new product vendors or products, in which existing vulnerability intelligence data is enriched with past vulnerability status data regarding backported vulnerability fix directed to the product vendors or products. In other variants, the pipeline configuration may be driven by new product updates and be used to keep the integrated vulnerability intelligence data up to date for already onboarded product vendors or products. Both variants may be used in combination by a security and vulnerability analysis vendors, depending on the phase (onboarding or maintenance) of supported product vendors or products.

Yet other variant embodiments may, to identify component or library variants provided by product vendors, download install binaries of those components, extract meta data from those binaries and compare this meta data with data describing publicly reported vulnerabilities to identify product/vendor specific backported vulnerability fixes and corresponding public vulnerability intelligence records. Such variants may also identify version data of such updated components or libraries, to determine whether they contain a backported vulnerability fix, to identify the version information of the component/library representing the publicly available version of the component/library that was used as the basis version on which the backported vulnerability fix was applied, and to also extract version data for the applied vulnerability fix itself. Rule based version data analysis processes may be applied for this task, where different vendor specific analysis rules may be maintained and used, each of those analysis rules directed to the conventions that are used by a specific product vendor to encode fix backport information into component/library version data. Such vendor specific version data analysis rule records may contain rules to determine whether a specific version string represents a version string provided by a specific vendor, rules to determine whether the version string indicates a backport of a vulnerability fix, rules to extract data for the base version on which the backport was applied, rules to extract data for the vulnerability that is addressed by the backport, and rules to extract backport specific version or revision data, if such data is available in the version string. Results of such version data analysis processes may include a structured representation of a received version string, which separates base version information, vendor identification and fix backport identification data from each other to support efficient downstream analysis processes based on version data.

The created integrated vulnerability intelligence data may be used for the analysis of component/library loading and using evidence data provided by monitoring components like agents that are deployed to monitored environments, which observe and report activities performed in those environments. Such component/library loading and evidence data may include identification data for a component/library and for the version of this component/library. A vulnerability analysis process using the integrated vulnerability intelligence data may start by determining if the reported component identification and version data map to a known public vulnerability (e.g., identified component is affected by a vulnerability and the reported version data falls within a version range that is affected by the vulnerability). If a vulnerability of the reported component/library is indicated according to publicly known vulnerability data, data for backported vulnerability fixes also stored in integrated vulnerability intelligence data may be used to determine whether reported version information indicates a version of the component/library that already contains a fix for the indicated vulnerability. In this case, no vulnerability is reported, as the vulnerability indication based solely on public vulnerability intelligence data is incorrect and therefore overruled by the additional fix backport intelligence data.

Further areas of applicability will become apparent from the description provided herein. The description and specific examples in this summary are intended for purposes of illustration only and are not intended to limit the scope of the present disclosure.

## Drawings

The drawings described herein are for illustrative purposes only of selected embodiments and not all possible implementations, and are not intended to limit the scope of the present disclosure.

FIGs. 1A and 1B provide block- and data flow diagrams, comparing security and vulnerability status analysis tools using prior-art approaches with solutions also considering vendor specific data for backported vulnerability fixes as described herein.

FIGs. 2A and 2B conceptually explain how conventional version data, which may be used to identify different versions of a product providing different, potentially increasing feature sets of component, may be distinguished from version data describing variants of components containing backported (vulnerability) fixes, and how well known versioning schemes, like semantic versioning may be adapted to enable the differentiation between version data describing conventional updates of components and version data describing component variants containing backported (vulnerability) fixes.

FIG. 3 shows, in form of a block diagram and in form of a flow chart, an exemplary version data analysis process, which may be used to identify version strings that identify component variants including

vendor specific, backported (vulnerability) fixes.

FIGs. 4A and 4B provide block diagrams of two processing pipeline variants to integrate public vulnerability intelligence data with product specific data for backported vulnerability fixes to create integrated vulnerability intelligence data. FIG. 4A is directed to a pipeline variant covering the maintenance of an already established integrated vulnerability intelligence database on emergence of new product update/backport information data, and FIG. 4B is directed to pipeline variant covering the "onboarding" of a product vendor or product to an integrated vulnerability intelligence database.

FIG. 4C provides a block diagram that illustrates the usage of an integrated vulnerability intelligence database to evaluate component/library usage data provided by monitoring entities like agents deployed to a monitored environment.

FIG. 5 provides flow charts describing processing required for the two variants of vulnerability data ingest pipelines described in FIG. 4A and 4B.

FIG. 6 shows a flow chart describing the processing of component/library usage evidence data provided by monitoring components like agents using integrated vulnerability intelligence data to create vulnerability status data and notifications that are not affected by false positives caused by vendor specific backported vulnerability fixes.

Corresponding reference numerals indicate corresponding parts throughout the several views of the drawings.

## Detailed description

The disclosed technologies are directed to vulnerability status assessment approaches that consider, in addition to main-stream vulnerability intelligence data providing information about detected vulnerabilities, fixes of those vulnerabilities and component variants or versions that are affected by those vulnerabilities, also product/vendor specific information about backported vulnerability fixes to reduce the number of false-positive vulnerability notifications.

Therefore, data of product/vendor specific update bundles is analyzed to identify updates containing backports of vulnerability fixes and version data identifying those backports is integrated with vulnerability intelligence data describing product/vendor independent vulnerability status data to create an integrated vulnerability intelligence database which also considers product specific backported vulnerability fixes.

Example embodiments will now be described more fully with reference to the accompanying drawings.

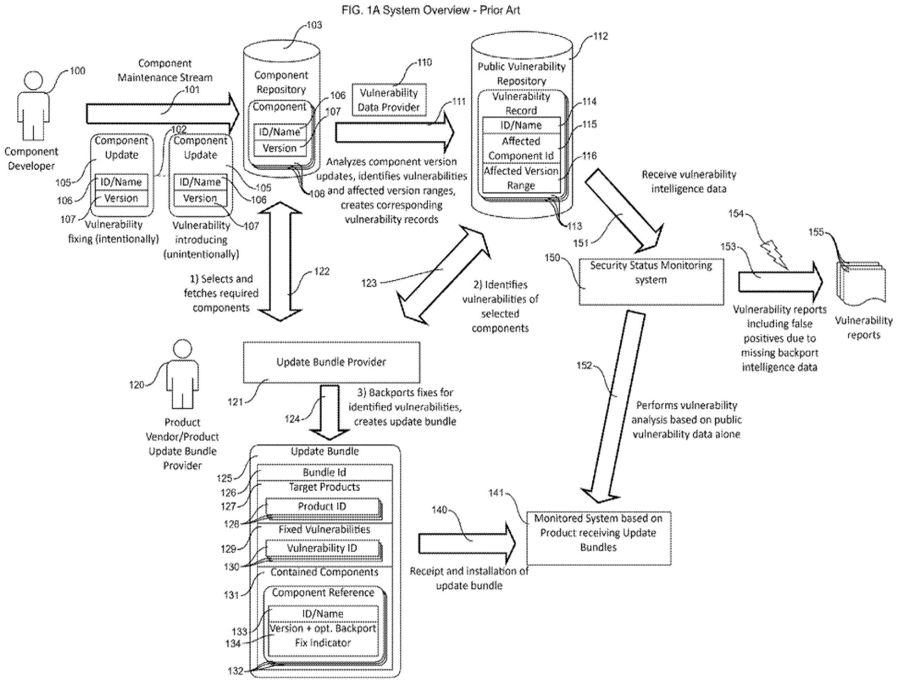

Referring now to **FIG. 1A,** which illustrates a setup for monitoring and reporting the security status of an observed computing environment that is prone to false positive vulnerability notifications caused by backported vulnerability fixes.

Component developers 100 provide streams of consecutive 102 updates 105 for components 108, each of those components and component updates are identified by a component identifier or name 106 and a version 107.

The components 108 are stored in a component repository 103, and each component update 105 creates a new variant of the component 108 in the component repository 103 with a new version number 107, which is preferably the version number 107 of the corresponding component update 105 that created the new variant. Both component updates 105 and components 108 contain, next to identifier 106 and version information, also software code (not shown), either in form of source code, byte code, binary or object code or other form of compiled code, which provides the actual functionality of the component or library.

Some component updates may, unintentionally, introduce vulnerabilities to updated components. After those vulnerabilities are detected, a subsequent component update may provide a fix for this vulnerability. This behavior leads to "version ranges" of component in which those components are affected by vulnerabilities. Those version ranges are typically defined by a first, start version, in which a vulnerability was introduced to the component, and a second, later end version, by which a fix for the vulnerability was added to the component.

A vulnerability data provider 110, which may be a governmental or a private entity, may cyclically scan 111 those components 108 for vulnerabilities and publish the outcome of those scans in a vulnerability repository 112 in form of vulnerability records113.

Vulnerability records 113 may contain but are not limited to an identifier or name of the vulnerability 114, uniquely identifying the vulnerability, an identifier for the component that is affected by the vulnerability, which typically maps to the identifier/name 106 of the affected component 108, and data describing the range of versions of the component that are affected by the vulnerability. This version range data typically evolves over time and may first only contain a start version identifying the variant of the affected component which introduced the vulnerability. Later, after a subsequent update of the component introduced a fix for the vulnerability with a subsequent update, also an end version for the affected version range may be set. It should be noted that considerable time may elapse between the introduction of a vulnerability and its detection by a vulnerability data provider, which leads to the creation of a corresponding vulnerability report. Therefore, multiple versions of the affected component may be published that are affected by this vulnerability before it is detected and publicly reported.

Product vendors 120 of complex software products, like operating systems or application servers, select 122 components 108 existing in the component repository to build those complex software products. Creating those complex software products includes intense development work and integration testing to ensure that all components/libraries that were selected to build the software product work and interact as expected. After developing and testing are finished, those software products are released for installation and use by customers of the product vendor. Those complex software products are typically identified by a combination of a product and vendor name, a version, and, in some cases, an identifier for a target environment/hardware architecture, which is abbreviated herein as product identifier.

In addition to providing complex software products, product vendors 120 typically also act as product update bundle providers, to provide update bundles 125 for already released versions of their software products. In this role, product vendors monitor 123 public vulnerability repositories 112, to identify 123 critical vulnerabilities or other issues that affect components 108 that are used in one or more of their released product versions.

If vulnerabilities are detected for components/libraries that are used in their software products, product vendors may create update bundles 125 for those products to address those vulnerabilities. Due to complex interdependencies of such components/libraries within the containing software product, a conventional remediation of the vulnerability issue by simply updating the affected component to a version that is no longer vulnerable, is typically not possible or too risky. To overcome this problem, code changes for a known fix for the vulnerability, which was typically introduced to a version of the affected component/library which is more recent than the version that was used in the software product, is isolated and incorporated/ported back to the version of the component/library that is used in the software product. The result of this "fix backport" is a variant of the component/library that has exactly the same behavior and functionality as the variant that is used in the software product, which is no longer affected by the identified vulnerability due to the backported fix code. Such "fix backport variants" of components/libraries are assigned a new version which is typically composed out of the version of the original variant of the component to which the backport was applied, an identifier for the vendor that applied the fix pack, a fix backport revision number (as the fix backport may also be developed in incremental steps, and also fix backports may be improved and updated), and an optional indicator that the version data indicates a component/library variant containing a backported fix.

After component/library variants containing backported vulnerability fixes are created, corresponding update bundle records 125 referring to those component/library variants are created. Such update bundles 125 may contain but are not limited to a bundle identifier 126 uniquely identifying an individual update bundle, a target products section, containing one or more product identifiers 128, identifying those software product variants to which the update bundle should be applied, a fixed vulnerability section 129, containing one or more vulnerability identifiers 130, each of those vulnerability identifiers identifying one vulnerability record 113 by its identifier/name 114, and a contained components section 131, containing one or more component references 132.

A component reference 132 may contain but is not limited to an identifier or name 133 of the referred component and version data 134, specifying an individual version of the component, which may also be a version indicating a variant of the component/library containing a backported fix. Such "fix backport" may be composed as described above.

Users of the complex software products provided by the product vendors may apply those update bundles on installed product instances according to indicated target product identifiers 126. This leads to the installation 140 of component/library variants containing backported fixes on their installed product instances.

Those users may also install and operate security status monitoring systems 150 to monitor and analyze 152 their computing environment with the goal of identifying and reporting components/libraries operating in those environments that are affected by known vulnerabilities (e.g., as described by vulnerability record 113 contained in public vulnerability repositories 112).

This includes the monitoring and analysis of monitored systems 141 on which update bundles 125 were applied to install component/library variants including backported vulnerability fixes.

Conventional security status monitoring systems 150 receive 151 vulnerability intelligence data solely from public vulnerability repositories 112. A vulnerability record contained in such vulnerability intelligence data typically identifies a specific component by its identifier 115 and specifies a version range of the component that is affected by the vulnerability. As an example, vulnerability record "X" may indicate that component/library "A" is affected by vulnerability "X" from version 1.2.3 (including) to version 1.4.3 (excluding).

An update bundle may contain a variant of component/library "A", which is based on version 1.3.2 and contains a fix for vulnerability "X" which was backported from version 1.4.3, the first version that was no longer affected by vulnerability "X". This variant of component/library "A" may be assigned the version 1.3.2.vendor_provided_fix_backport.

This variant of the library may be installed in monitored system 141, e.g., due to the application of an update bundle 125.

The security status monitoring system 150 may receive observation data describing the usage status of components/libraries by the monitored system 141. As an example, monitoring agents (not shown) may be installed on the monitored system, which monitor activities like the start and stop of processes, and the loading and usages of components/libraries and other files by those processes. Such component/library usage status data may contain an

identifier of a used component and the version of this component. Continuing above example, component/library usage status data indicating the usage of component/library "A" in version 1.3.2.vendor_provided_fix_backport would be reported to the security status monitoring system.

As the security status monitoring system only uses public vulnerability intelligence data, it has no information about backports of vulnerability fixed provided by individual product vendors and therefore can only use affected component identifier 115 and affected version range 116 for a vulnerability status assessment. As the reported version of component/library "A", which is 1.3.2.vendor_provided_fix_backport falls in the affected version range for vulnerability "X", which starts with version 1.2.3 and ends with version 1.4.3, the security status monitoring system 150 creates 153 an incorrect/false positive 154 vulnerability report 155 indicating that a version of component/library "A" which is affected by vulnerability "X" is used by the monitored system 141.

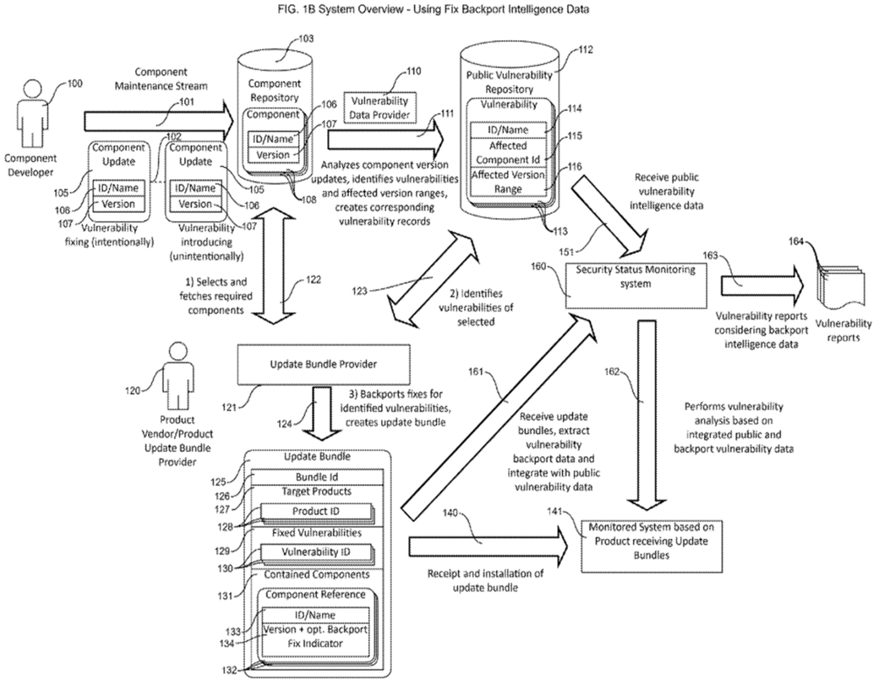

Referring now to **FIG. 1B,** which provides a variant setup of a vulnerability status monitoring system 160 that uses public vulnerability intelligence data in combination with individual vendor provided information about backported vulnerability fixes for vulnerability status assessments to avoid creation of incorrect/false positive vulnerability reports.

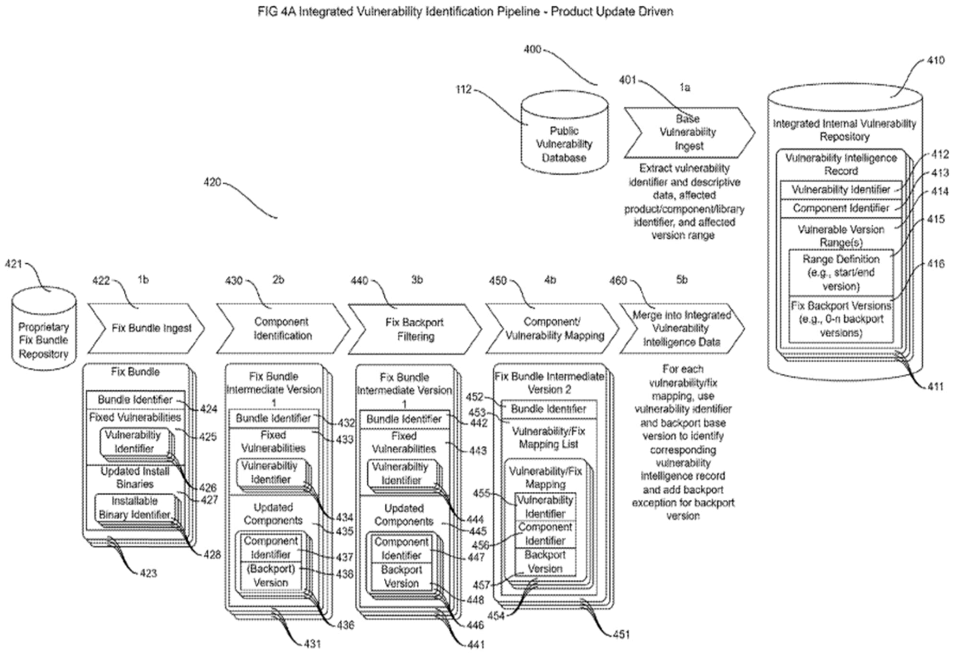

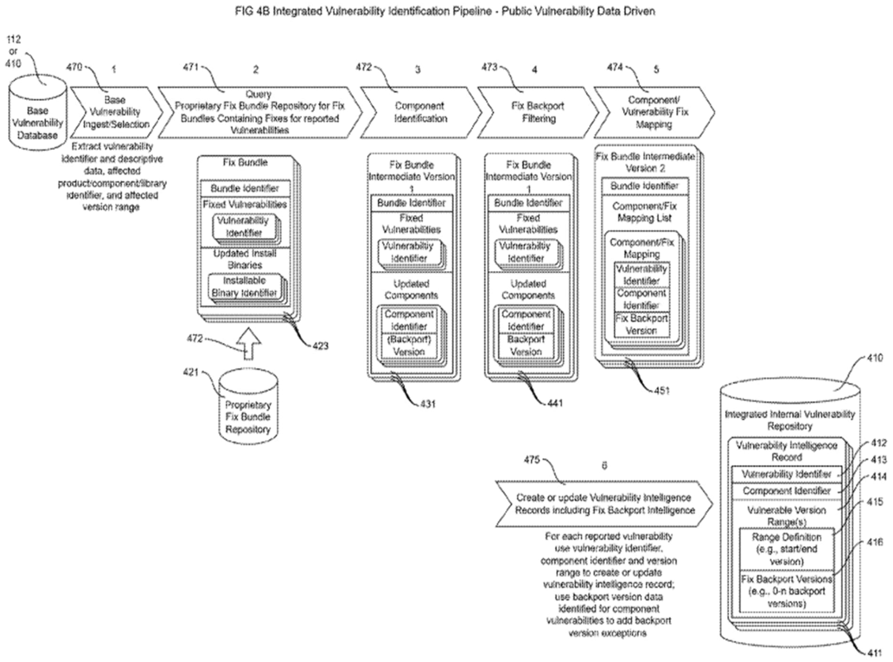

Same as in FIG. 1A, the security status monitoring system 160 receives 151 public vulnerability intelligence data from public vulnerability repositories 112. But in this case, it also receives and processes 161 vendor specific update bundle data describing vendor specific backports of vulnerability fixes. The security status monitoring system combines this data describing these vendor specific backported vulnerability fixes with vulnerability data from public vulnerability repositories 112 to create integrated vulnerability intelligence data which also considers backported vulnerability fixes (see e.g., FIG. 4A and 4B).

Again, same as in FIG. 1A, the security status monitoring system 160 performs a vulnerability analysis 162 of elements like host computing systems, operating systems, or executing processes, but in this case the vulnerability analysis is based on integrated vulnerability intelligence data which also describes vendor specific backported vulnerability fixes. Therefore, the generated 163 vulnerability reports 164 do not contain false positives that are caused by not considered vendor specific backports of vulnerability fixes. Referring back to the example executed in FIG.1A, also here an agent may report usage of component/library "A" in version 1.3.2.vendor_provided_fix_backport. But in this case, no vulnerability report is created because in this case, the combined vulnerability indicator indicates that although version 1.3.2 falls into the vulnerable version range, the specific 1.3.2.vendor_provided_fix_backport is excepted from this range, because this version contains backported fix for the vulnerability.

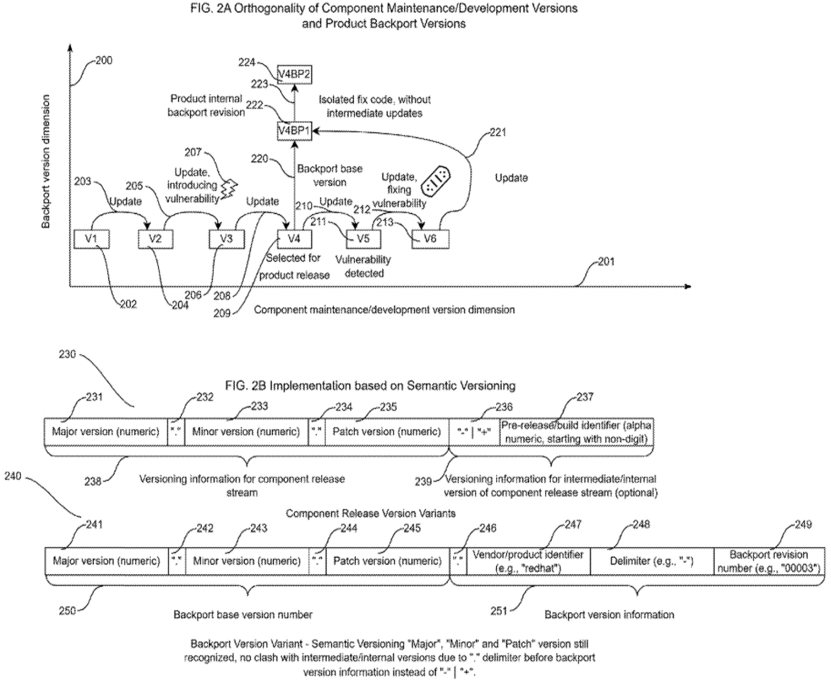

Referring now to **FIG. 2A,** which conceptually explains the difference between version numbers used to identify component variants that are created during conventional component development and update, and version numbers that are used to identify component variants that contain a backported fix for a vulnerability or other issue.

Conceptually, a component maintenance/development dimension 201 and a backport version dimension can be identified. A given component may be available in version V1 202, to which a conventional maintenance update 203 may be applied, which leads to a variant of the component in version V2 204. A subsequent conventional update 205 creates another variant of the component with version 206. In addition to desired changes and improvements, update 205 also introduces a vulnerability 207. At the time when version 206 is released, the vulnerability is not detected. Following update 208 creates component version V4 209, which is selected by a product vendor as component variant that is used for the release of a complex software product. Next update 210 creates component variant V5 21, on which a security and vulnerability scan is performed, during which the vulnerability 207 introduced by update 205 is detected. Result of this vulnerability scan is a public vulnerability record indicating that the component is affected by vulnerability 207 since version V3. Subsequent update 212 adds a fix for vulnerability 207 and creates a new version V6 of the component which is no longer affected by the vulnerability. This may lead to an update of the public vulnerability record which specifies the range of versions of the component that is affected by vulnerability 207 by start version V3 (including) and end version V6 (excluding). In addition, the vendor of the complex software product that previously selected version V4 for its product release may isolate 221 the code that fixed vulnerability 207 in version V6, where this fix code does not contain updates introduced to the component with intermediate version V5.

The isolated fix code is then applied to the code of version V4, to create a first variant of component version V4 that contains the fix for vulnerability 207. The version number 222 for this new version is V4BP1, where the first two characters of the new version "V4" indicate that the version from the "main development line" of the component to which the fix backport was applied is version V4 209. This version may also be referred to as the base version 220 of the backported fix. The following two characters "BP" of the version indicate that this version contains a fix that was backported by the product vendor and the last character "1" may be used to define a version or revision sequence of updates applied by the product vendor on base version V4.

During testing of version V4BP1, the product vendor may identify shortcomings of the applied fix code. Those shortcomings may be addressed with an update 223 of component version V4BP1, which creates a new variant of the component with version V4BP2 224.

Public vulnerability records often become available only after several component versions have already been released. For example, a vulnerability introduced in version V3 of a component may not be detected until version V5 is

publicly available. In such cases, the public vulnerability record initially specifies only a start version (V3). When a later component update (V6) introduces a fix, the public data source subsequently updates the record to include an end version (V6).

Coming now to **FIG. 2B,** which shows by example how these two versioning dimensions may be implemented in practice, e.g., by adapting the widely used semantic versioning scheme. According to the specification of semantic versioning, a version string 230 starts with a (numeric) major version number 231, followed by a "." delimiter 232, which is followed by minor version number 233, another "." delimiter 234 and a patch version 235. After those mandatory version components, which also represent the version information for component release streams 238, an optional part 239 of the version data to identify intermediate or internal version follows. This optional part starts with a delimiter which is either "+" or "-" 236, followed by an alphanumeric pre-release or build identifier 237, which starts with a non-digit character.

It should be noted that variations of the semantic versioning specification are used in the field, like some versioning variants using more than the three version hierarchies "MAJOR" 230, "MINOR" 232 and "PATCH" 234. But almost all of those variants have in common that they define or use two or more hierarchical, numeric version elements, which are separated by a "." delimiter. Those numeric version elements are followed by an optional part, which starts with delimiter different to the "." delimiter, followed by an alphanumeric string.

An exemplary adaptation of the sematic versioning scheme directed to describe versions containing vendor specific backports is shown in version string schema 240. As a conventional version string, this adapted version string starts with major version 241, first "." delimiter 242, minor version 243, second "." delimiter 244, which is followed by patch version 245. Those elements form the base version 250 of the backport, which identifies the version of software component to which the backported fix was applied.

The base version 250 part of such an adapted version scheme is followed by vendor specific backport version information 251. The here described variant of backport version information is aligned with the backport versioning scheme used by the software product vendor RedHat. This version starts with a "." delimiter 246 followed by a vendor/product identifier 247, which indicates a version of the component that was modified by this specific software product vendor. The vendor/product identifier is followed by a delimiter "-" 248 which separates the vendor/product identifier 247 from a (numeric) backport revision number 249. It should be noted that different product vendors may use different variants of versioning schemes to mark and identify component versions containing updates provided by them. However, those different schemes should all have in common that they start with version identification data for the component version on which their modification/fix is applied (the base version), followed by a delimiter that separates base version information from modification/fix identification information (it should be noted that the RedHat variant uses a "." delimiter before the first non-numeric version element instead of "-" or "+". This alone distinguishes a "standard" version string from a version string identifying a component variant that was modified by RedHat). The backport version information should in all variants at least contain an identifier for the software product vendor that provided the modification/fix backport.

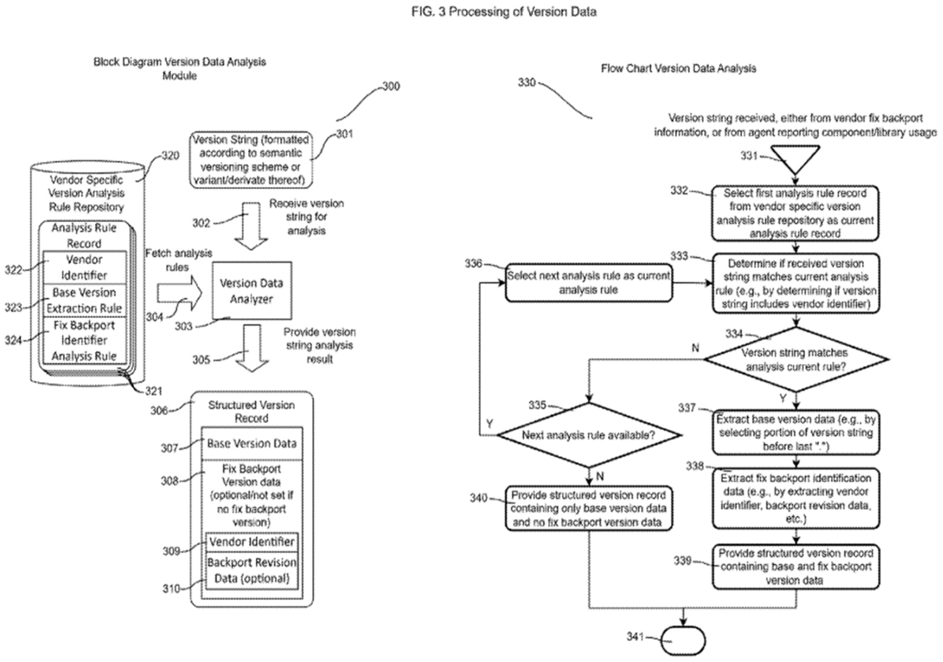

Coming now to **FIG. 3,** which provides a block diagram of a version data analysis module directed to identify version strings representing component variants containing vendor specific modifications, including backported vulnerability fixes, and a flow chart describing the analysis process performed by the version analysis module.

A version data analysis module 300 may contain a vendor specific version analysis rule repository 320, containing multiple analysis rule records 321, each of those analysis records directed to the versioning scheme of a specific product vendor, and a version data analyzer 303, which receives 302 version strings 300 and fetches 304 analysis rules 321 from the analysis rule repository 320 to perform the version string analysis (as described in detail in flow chart 330) to create and provide 305 structured version records 306 for received version strings 301.

An analysis rule record 321 may contain but is not limited to a vendor identifier section 322, which contains filtering rules to select version strings for a specific vendor, a base version extraction rule 323, which is adapted to the versioning scheme used by the vendor identified by the vendor identifier section 322, and fix backport identifier analysis rules 324, specifying rules for the analysis of backport identification data that follows the versioning scheme of the vendor identified in the vendor identifier section 322.

A structured version record 306 may contain but is not limited to a base version data section 307, and an optional fix backport version data section 308, which may only be available if the version string from which the structured version record was created is a version that identifies a component variant that contains a product vendor specific modification and that follows the versioning scheme of the product vendor. The fix backport version data 308 may contain a vendor identifier 309, and if the versioning scheme of the product vendor includes backport revision numbers, backport revision data 310.

The processing performed by the version data analyzer 303 is described in flow chart 330 and starts with step 331 when the version data analyzer receives a version string for analysis. Following step 332 fetches the first analysis rule from the rule repository 320 and subsequent step 333 uses the vendor identifier data 322 of the selected rule to determine if the received version string matches the selected rule. As an example, vendor identifier data 322 may specify a string identifying a vendor (e.g., "redhat") and step 333 may check whether the received version string contains the vendor identifying string to determine if the selected rule matches the received version string. Following decision step 334 may

continue the process with step 337 if the received version string matches the selected analysis rule and with decision step 335 otherwise.

Decision step 335 determines if a next, not yet applied analysis rule record 321 is available in the rule repository 320. If such a rule is available, this one is selected in step 336, and the process afterwards continues with step 333. If otherwise no next analysis rule record exists, then the process continues with step 340, which creates a structured version record 340 which only contains base version data 307, where this base version data describes the whole received version string. The fix backport version data 308 of the structured version record 306 created by step 340 remains empty, as in this case no fix backport version information was detected. The process then ends with step 341.

If decision step 334 continues the process with step 337, because the selected analysis rule matches the received version string, first base version data contained in the version string may be identified and isolated by step 337, e.g., by selecting the portion of the version string before the last "." delimiter if the version string follows the versioning scheme used by RedHat. Following step 338 may then apply fix backport identifier analysis rules 334 on the portion of the version string that is not related to the base version of the fix backport. For the RedHat versioning scheme this may be the portion of the version string following the last "." delimiter. Step 338 may select vendor identifier data, and if available, fix backport revision data from the version string, and following step 339 then creates a structured version record containing base version data 307 as created by step 337 and fix backport version data as created by step 338. The process then ends with step 341. It should be noted that the filtering, selection and extraction activities performed by process 330 may include the evaluation of regular expressions that are designed and tailored for vendor specific backport versioning schemes. Those vendor specific regular expressions may be stored in the analysis rule records 323.

A version data analysis module 300 may be used to analyze version data of component references 132 contained in update bundles 125 to determine if extracted base version data falls into the affected version range of a publicly known vulnerability and to create an exclusion/exception within this range for an identified version indicating a backported vulnerability fix. Such a module may also be used on version data received from monitoring components like agents for components that are installed and used on monitored systems 141, also to determine if the base version falls into the affected version range of a publicly known vulnerability and if an exclusion/exception from this range exists for the reported component version.

Coming now to **FIGs. 4A** and **4B,** which describe two variants of processing pipelines that receive and process public vulnerability intelligence data and vendor proprietary product update bundles, potentially containing or referring component variants including backported vulnerability fixes, to create integrated vulnerability intelligence data that also covers proprietary, vendor specific backports of vulnerability fixes.

The pipeline variant described in FIG. 4A is directed at the scenario where a specific product vendor or product is already onboarded with a security status monitoring system 160 and the integrated internal vulnerability repository 410 is in a state where all previous product updates of the product vendor are already incorporated and only new product updates need to be processed.

The architecture shown in FIG. 4A includes two parallel vulnerability ingestion pipelines 400 and 420, where the first ingestion pipeline 400 is directed to ingest public vulnerability data, like CVE records to create corresponding vulnerability intelligence records 411, and the second ingestion pipeline 420 is directed to the ingest of vendor specific update bundles 125 describing vendor specific vulnerability fixes for one or more individual, vendor specific products, which are used to identify vendor specific vulnerability fixes for components, including backported vulnerability fixes and to update vulnerability intelligence records 411 describing the fixed vulnerabilities with vendor specific vulnerability fix data.

The first ingestion pipeline 400 starts with a public vulnerability database, like NVD, from which CVE records are ingested 401. Ingestion may be implemented in form of updates/notifications provided by the public vulnerability database, to which a security status monitoring system subscribes to receive new CVE records, or in form of a polling mechanism, where the security status monitoring system cyclically queries the public vulnerability database for new vulnerability records. Regardless of the way this ingestion of new vulnerability records is triggered, all new vulnerability records are transferred into vulnerability intelligence records 411 and stored in the integrated internal vulnerability repository.

A vulnerability intelligence record 411 may contain but is not limited to a vulnerability identifier 412, which may be set to the vulnerability identifier of the ingested vulnerability record from which the vulnerability intelligence record was created, a component identifier 413, which identifies the component that is affected by the vulnerability, also this value is set from a component identifier of the ingested vulnerability record, and vulnerable version range data 414, which specifies the versions of the identified component that are affected by the vulnerability. Vulnerable version range data 415 may contain but is not limited to a version range definition 415, typically specifying a start version which introduced the vulnerability and an end version identifying the version of the component which introduced the fix for the vulnerability, and fix backport versions 416, which define one or more versions of the component that are within the vulnerable version range 415, but which are not affected by the vulnerability, e.g., due to a backported fix. Therefore, those fix backport versions represent versions that should be excluded from the vulnerable version range 415.

During ingest of vulnerability records from the public vulnerability, only range definitions 415 of vulnerability intelligence records are set, as data about proprietary, vendor specific fix backports is not available in public vulnerability

databases. If a public vulnerability record is ingested before a fix for the vulnerability is available, then this vulnerability record may only contain a start version indicating the version with which the vulnerability was introduced. In such cases, the range definition 415 may also contain only a start version, which indicates that all variants of the component with a version equal or higher than the start version are affected by the vulnerability. If later a fix for the vulnerability is available with a subsequent version, the corresponding vulnerability record is updated with an end version indicating the component variant containing the fix. The updated public vulnerability record may then be ingested again, leading to the update of the range definition 415 of the corresponding vulnerability intelligence record to also contain an end version.

The second branch of the ingest pipeline 420 is directed to receive fix bundles 423 (which may be considered as variants of update bundles 125 described in FIGs 1A and 1B) from a proprietary fix bundle repositories 421, which may be operated by product vendors 120 to provide updates and fixes for their released products. The fix bundles are analyzed to extract data for backported vulnerability fixes from those fix bundles and to finally enrich vulnerability intelligence records 411 stored in the integrated internal vulnerability repository 410 with this extracted data for backported vulnerability fixes.

A first fix bundle ingest stage 422 of the pipeline may receive fix bundle records 423 from a proprietary fix bundle repository. As the base vulnerability ingest stage 401 of the other pipeline branch, also the fix bundle ingest stage may either cyclically poll the proprietary fix bundle repositor 421 for new fix bundle, or it may be registered to receive push notifications about new fix bundles from the proprietary fix bundle repository 421.

Such a fix bundle record 423 may contain but is not limited to a bundle identifier, which uniquely identifies the fix bundle record, a list of fixed vulnerabilities 425 containing vulnerability identifiers 426, each of those vulnerability identifiers identifying one publicly known vulnerability and also one vulnerability intelligence record 411 by its vulnerability identifier 412, and a list of updated components 427 which contains installable binary identifiers 428 which identify a installable binary provided by the product vendor 120.

Examples for such update or fix bundles are RedHat Security Advisories (RHSAs) provided by the product vendor RedHat. Such RHSAs provide a list of CVEs (i.e., vulnerability identifiers 425), a list of product types and versions to which the RHSA is directed (maps to target products 126 of update bundles 125), and a list of RedHat Package Manager package (RPM) identifiers (maps to updated install binaries 427). Other software product vendors, like Ubuntu, Microsoft, Oracle, and the like provide product updates in a similar way.

The subsequent component identification pipeline stage 430 is directed to the analysis of the installable binaries identified by the installable binary identifiers 428 provided by the fix bundle to identify components contained in those binaries and their versions. Such installable binaries may contain more than one updated component, and the name of such installable binaries alone may not be sufficient to identify contained components. Therefore, pipeline stage 430 may download the installable binaries identified by the fix bundle (either individually or bulked) and analyze those binaries to identify the components they contain. This analysis may include, for a referred installable binary package, downloading a corresponding variant of the package also containing component source code, and analyzing metadata for a component contained in either the installable binary package or the corresponding variant also containing source code, to extract identification data for the component and data for the version of the component.

As an example, based on RedHat RHSA, the RHSA-2023:0554 provides fixes for 19 different vulnerabilities, including the vulnerability CVE-2022-42004. RHSA-2023:0554 also refers to RPM eap7-jackson-databind-2.12.7-1.redhat_00003.1.el9eap.rpm. The identifier for the corresponding RPM also containing source code is eap7-jackson-databind-2.12.7-1.redhat_00003.1.el9eap.src.rpm. I.e., as a convention, an RPM also containing source code is identified by the string "src" right before the file extension ".rpm". An automated process may use this convention to generate identifiers for RPMs also containing source code.

RedHat operates various RPM repositories containing RPM files for downloading. Those RPM repositories may be queried, and individual RPM files may be downloaded from them using the RPM identifiers (i.e., RedHat variant of installable bundle identifiers 428) provided by RHSAs. Other product vendors may operate similar repositories for the query and download of installable binaries.

The downloaded RPM file may be analyzed to identify contained components and metadata related to those components. For the example package eap7-jackson-databind-2.12.7-1.redhat_00003.1.el9eap.src.rpm, this may reveal, amongst others, the file "jackson-databind-2.12.7.redhat-00003.pom". A ".pom" file is a component metadata file for Java® components distributed via the Maven package manager ecosystem notated in XML. Other component manager ecosystems may use other metadata file names and other notations. As an example, the npm package manager uses a file named "package.json" to provide component metadata. Common to metadata provided by all those package manager ecosystems is that the metadata is well structured and machine readable and that it contains data describing identity and version of the component or package described by the metadata.

An automated process may first identify the type of component and notation of the metadata, based on name and format of metadata files for the component and then apply a type/package manager/notation specific analysis method on the identified metadata file. Goal of this analysis is to detect name and identifier of the component and its version.

For Maven/POM based metadata, this would be an XML file with a file name ending with ".pom" containing XML elements "groupId" and "artifactId" to define name or identifier of the component, and XML element "version" providing the

version string for the component variant referred by the POM file, see Listing 1.

RHSAs are both provided in human and machine-readable form. To identify data of an RHSA, an automated RHSA analysis process may either parse the human readable form to identify

Listing 1

```
<groupId>com.fasterxml.jackson.core</groupId>
<artifactId>jackson-databind</artifactId>
<version>2.12.7.redhat-00003</version>
```

covered vulnerabilities, updated install binary identifiers, RHSA identifier and addressed software products, or it may access the machine-readable form, which includes, for RHSAs, the Vulnerability Exploitability eXchange (VEX) format, or the Open Vulnerability and Assessment Language (OVAL) format. Those machine-readable formats are standardized and structured for easy and unambiguous identification, selection, and processing of contained data.

RedHat uses the Common Security Advisory Framework (CSAF) format, which is based on VEX to provide RHSAs in machine readable format. Following Listing 2 shows a snipped of a CSAF representation of RHSA-2023:0554 which indicates that it refers eap7-jackson-data-bind-2.12.7-1.redhat_00003.1.el9eap.src.rpm and that this RPM contains a fix for vulnerability CVE-2022-42004. The listing is notated in JSON format, and the section formed by the curly braces in lines 2 and 17 defines a JSON object/key-value pair set identifying and describing vulnerability CVE-2022-42004 (lines 3 to 7) followed by structured information about the status of affected products and components (lines 8 to 17). This includes also information about products or components that are not affected and the like, which is omitted here (ellipses ... in lines 8, 14 and 16). It also contains information about products or components which contain a fix for this vulnerability, see lines 10 to 13. This section contains identification data for the install bundle of eap7-jackson-databind-2.12.7-1.redhat_00003.1.el9eap.src.rpm containing source code (see line 12), and the version containing no source code (see line 11).

An automated analysis process based on the CSAF format may first search the CSAF Json file of a RHSA for objects/key value pair sets with a key-value pair with key "cve". If fix data for

```
...
{
"cve": "CVE-2022-42004",
"cwe": {
  "id": "CWE-502",
  "name": "Deserialization of Untrusted Data"
 },
  ...
"product_status": {
       "fixed": [
"9Base-JBEAP-7.4:eap7-jackson-databind-0:2.12.7-1.redhat_00003.1.el9eap.noarch",
"9Base-JBEAP-7.4:eap7-jackson-databind-0:2.12.7-1.redhat_00003.1.el9eap.src"
             ],
      ...
}
...
}
...
```

*Listing 2*

a specific CVE is searched, the process may also compare the value of this key-value pair for a specified CVE identifier. If a matching objects/key value pair set is found, the process may search for a "product status" key-value pair, and within this key-value pair for a nested key-value pair with key "fixed", and then analyze the value of this key-value pair to identify referred installable binary/RPM identifiers.

Other product vendors may also provide update bundles in both human and machine-readable form and may use

those or other standards for provided machine-readable variants of their update bundles. Examples for such other vendors and their update bundle formats include Ubuntu with USNs packages and APT metadata, Debian with DSA/DLA formats, or Microsoft with MSRC / KB packages.

Result of component identification stage 430 is a fix bundle in a first intermediate version 431, which also contains a bundle identifier 432 and fixed vulnerabilities, as the received fix bundle 423, but instead of updated install binaries 428, it contains an updated components list 435, containing updated component entries 436, where each of those entries contains, but is not limited to a component identifier 437 and a component version 438. Up to now, the updated components list 435 may also contain components providing "conventional" updates, like bug fixes or normal updates, next to component updates containing backported vulnerability fixes.

Following fix backport filtering pipeline step 440 identifies those updated components that contain a backported fix for a known vulnerability. To identify those component updates, pipeline step 440 may, for each updated component entry 436, query the integrated internal vulnerability repository 410, for vulnerability intelligence records 411 with a component identifier 414 matching the component identifier 437 of the entry. If no such vulnerability intelligence records 411 exists, the entry may be skipped. Otherwise, step 440 may determine if the version 436 of the entry falls into the version range 415 of a previously queried vulnerability intelligence records 411. If the version 436 does not fall into at least one version range of the previously queried vulnerability intelligence records, it is skipped. Only updated component entries 436 that are not skipped are used for the creation of the second instance of fix bundle intermediate version 441, which has the same structure and data as the first instance 431, except that the updated components list 445 now only contains updated component entries 446 of component versions 448 that contain a backported vulnerability fix.

Next, the component/vulnerability mapping pipeline step 450 creates mappings form vulnerabilities to component versions that fix those vulnerabilities.

To create this mapping, step 450 may, for each vulnerability identifier 444 in the fixed vulnerabilities list of a fix bundle received in intermediate version 1, query the integrated internal vulnerability repository 410 for a vulnerability intelligence record 411 with matching vulnerability identifier 412. Then, the updated components list 445 may be scanned to select list entries 448 with a component identifier 447 matching the component identifier 414 of the selected vulnerability intelligence record and a backport version 448 that falls into the vulnerable version range definition 415 of the selected vulnerability intelligence record 411. For each list entry 446 that is selected by the scan, a vulnerability/fix mapping entry 454 is created. A vulnerability/fix mapping entry 454 may include but is not limited to a vulnerability identifier 455 identifying a vulnerability intelligence record 411 and a publicly known vulnerability, a component identifier 456 identifying a software component and a backport version 428 identifying a version of the component that contains a backported fix for the identified vulnerability.

An alternative way to create those vulnerability/fix mapping would be to start with component identifier 447 and backport version 448 of a component that is updated by the fix bundle and query the integrated internal vulnerability repository 410, or a public vulnerability repository for vulnerabilities by which the component is affected and that have a vulnerable version range into which the backport version 448 falls. If such vulnerabilities exist, the identifiers of those vulnerabilities may be matched with the fixed vulnerability identifiers 426/434/444 of the currently processed fix bundle. For vulnerability identifiers of vulnerabilities that were found for the component identifier 447 and backport version 448 either in public vulnerability repositories, or for which vulnerability intelligence records 411 were found in the integrated internal vulnerability repository 410, that are also contained in the fixed vulnerability identifiers of the currently processed fix bundle, corresponding vulnerability/fix mapping entries 454 may be created. Each of the created vulnerability/fix mapping entries may use the same component identifier 447 and backport version with which this mapping variant started, and one of the identified vulnerability identifiers (which are fixed by the fix bundle, and for which public vulnerability data indicates that the component in this version is affected by the vulnerability) as vulnerability identifier 455.

For each created vulnerability/fix mapping entry 454, the vulnerability identifier 445 is set to the vulnerability identifier 412 of the selected vulnerability intelligence record 411, and component identifier 456 and backport version 457 are set to the corresponding values 447 and 448 of a previously selected list entry 446.

The result of pipeline step 450 is a fix bundle in intermediate version 2 451, containing a bundle identifier 452 and a set of vulnerability/fix mappings 453 containing the vulnerability/fix mappings 454 created before.

The final merging and integration pipeline step 460 receives the fix bundle in intermediate version 2 450 and uses the vulnerability identifier 455 and component identifier 456 of each vulnerability/fix mapping 454 to select a corresponding vulnerability intelligence record 411 (i.e., one with matching vulnerability identifier 412 and component identifier 413), and then use the backport version 457 of the vulnerability/fix mapping 454 to update the fix backport versions section 416 of the selected vulnerability intelligence record 411, i.e., by adding the backport version 457 to the backport versions section 416. In some variant embodiments, backport version section may be formatted as a list of version strings, in other variants it may be formatted as list of structured version records 306 that may be created by applying process 330 on the backport version strings 457. Yet other variant embodiments may, in addition to backport version data also add data for the origin of the backport in a fix backport versions entry, like the name of the product vendor providing the fix bundle, the identifier 424 of the fix bundle 423 and the identifier of the installable binary 428 containing the component variant on which the backport of

the vulnerability fix was applied, and identification data for the product variant/version or architecture for which the fix bundle containing the backported vulnerability fix is intended. This additional data may then be used for additional plausibility and consistency check when the created fix backport version data 416 is used to assess the vulnerability status of an actually used component. As an example, for RPM packages, the following schema: <name>"- "<version>"-<release>"."<architecture>".rpm". During a vulnerability assessment, the architecture of the software product (e.g., operating system) may also be retrieved and compared with the architecture indicated by the RPM name.

It should be noted that the visualization of the processing pipeline is directed to provide understanding of the different transformation steps that are applied on received fix bundles to create corresponding vulnerability intelligence data updates. For optimized processing performance, some of those transformation steps, like the filtering step 440 and the mapping step 450 may be combined.

Coming now to FIG. 4B, which describes a vulnerability data ingestion pipeline variant which may be used for the onboarding phase of a new product vendor or product, to "catch up" the integrated internal vulnerability repository with vulnerability intelligence data for past vulnerability backports for the new supported product vendor/product.

Pipeline processing starts with the receipt of a vulnerability record, for which update with product specific data for backported vulnerability fixes is desired, by pipeline step base vulnerability ingest/selection 470. The vulnerability record may be received e.g., in form of a CVE from a public vulnerability database 112, or from the internal integrated vulnerability repository, in form of a vulnerability intelligence record 411. The vulnerability record may describe a new detected vulnerability, or it may be an already known one.

Following pipeline step 471 then queries 472 the proprietary fix bundle repository 421 provided by a product vendor for fix bundles 423 containing fixes for the vulnerability received or selected by step 470 of the pipeline. This may be performed in two query stages, where a first query stage uses a vulnerability identifier, like a CVE to query the proprietary fix bundle repository for the identifiers of fix bundles that contain a fix for the provide vulnerability identifier. The returned fix bundle identifiers may then be used in a second query to select or download the fix bundles identified by the first result of the query.

For vulnerability data processing of RedHat products, the fix bundle query 472 performed by pipeline stage 471 may use the query endpoint "access.redhat.com/hydra/rest/securitydata/cve", and provide the desired vulnerability identifier (e.g., CVE-2022-42004) as query parameter, to create a query string like "access.redhat.com/hydra/rest/securitydata/cve/CVE-2022-42004". This query returns all RHSAs that contain a fix for vulnerability CVE-2022-42004.

Following pipeline stage 472 then performs the retrieval of component identifier and version data for installable binary identifiers stored in received fix bundles, as already described for pipeline stage 430 of the before described pipeline variant. Result of pipeline stage 472 are fix bundle records in intermediate version 1, which contain updated component entries 436 for all contained component updates, regardless of describing backported vulnerability fixes or not.

Subsequent pipeline stage 473 then filters those updated component entries 436 describing backported vulnerability fixes, as already described for stage 440 of the before described pipeline variant and following pipeline stage 474 may then perform the mapping of vulnerabilities to component updates, as also already described for stage 450 of the before described pipeline variant. In addition, pipeline step 474 may remove all component/ fix mappings that are not matching to the vulnerabilities received/selected by pipeline stage 470 for which an update with vendor specific data for backported vulnerability fixes was desired. Such a filtering may also be performed in a previous pipeline stage, like stage 2, 3 or 4, by removing all vulnerability identifiers from the list of that do not match vulnerabilities received/selected by pipeline stage 470 from the fixed vulnerabilities list 433 of the received fix bundle 423 or an intermediate version 443.

Following pipeline stage 475 then adds the created data for backported vulnerability fixes to corresponding vulnerability intelligence records 411 in the integrated internal vulnerability repository. This may include creating a new vulnerability intelligence record 411 if the base vulnerability of an identified backported vulnerability fix is not known, or the update of a known vulnerability intelligence record identified by vulnerability identifier and component identifier of a component/fix mapping with version data for the backported vulnerability fix from the component/fix mapping.

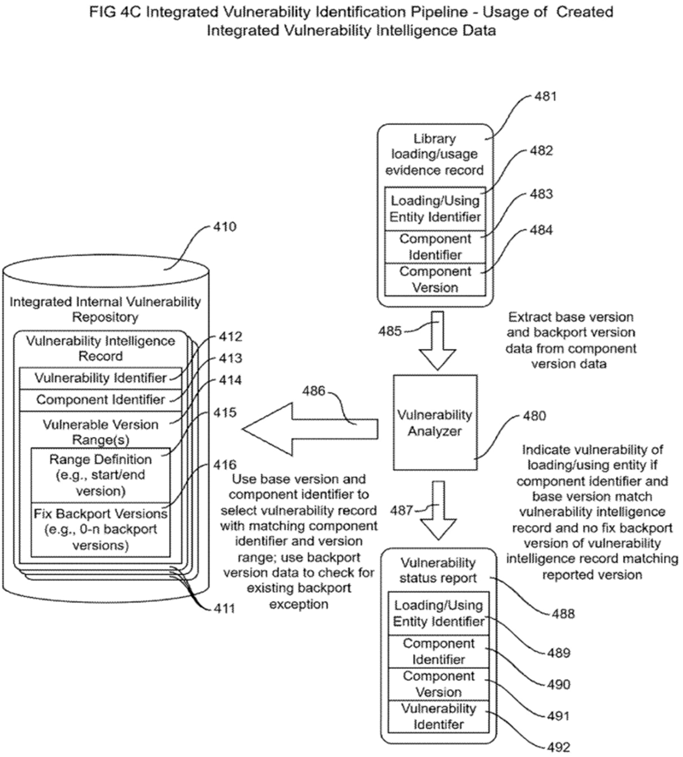

Coming now to FIG. 4C, which illustrates the usage of the integrated internal vulnerability repository 410, that is created, updated, and maintained by the pipeline variants shown in FIGs. 4A and 4B.

A monitoring component, like an agent (not shown), deployed to a monitored environment detects loading or usage of a component within the monitored environment (i.e., a process running in this environment loads and/or uses a component or library) and reports this in form of a library loading/usage evidence record 481. Such a record may contain but is not limited to a loading/using entity identifier 482, which identifies the software entity, like a process executing code, that performed the component loading or usage, a component identifier 483 identifying the loaded component or library and a component version 484 identifying the version of the component variant that was loaded or used.

Reporting library loading/usage evidence records may include installing monitoring agents into operating systems or processes operating in monitored computing environments, those monitoring agents detecting activities within those computing environments like the loading of files by processes, determining whether those files represent executable components or libraries, detecting of execution of code contained in those files, and selecting and parsing metadata for those components or libraries to determine component identifier and version data. Those agents may then

send created library loading/usage evidence records to a receiving monitoring server via a connecting computer network.

The library loading/usage evidence record is forwarded 485 to a vulnerability analyzer 480, which may apply version data processing as described in FIG. 3 on the received version data to extract base version data 307 and version data indicating a backported vulnerability fix 308 from the received component version data 484.

The vulnerability analyzer 480 may then use component identifier 483 and, either the extracted base version data, or the originally received component version data 484, to query 486 the integrated internal vulnerability repository 410 for vulnerability intelligence records 411 with a component identifier 412 matching the received component identifier 483 and with a vulnerability version range definition 415 into which the received component version 484 or the extracted base version falls.

If no such vulnerability intelligence records 411 are found, no vulnerability status report may be issued.

If otherwise one or more matching vulnerability intelligence records 411 are found, their fix backport versions section 416 are queried if they contain a fix backport version that matches the received component version 484. If at least one of the matching vulnerability intelligence records does not contain a matching fix backport version in its fix backport version section, then a vulnerability status report 488 is created and issued 487 that indicates that a software entity operating in the monitored environment loaded or used a component that is affected by a vulnerability. Such a vulnerability status report may contain but is not limited to a loading/using entity identifier 489 identifying the entity, like a process executing code, that loaded a vulnerable library or an operating system that loaded a vulnerable library for usage in a driver or other areas of the operating system, component identifier 490 and component version 491 data, identifying the component and the variant of the component that was loaded or used by the entity, and a vulnerability identifier 492 identifying the vulnerability by which the loaded or used component variant is affected.

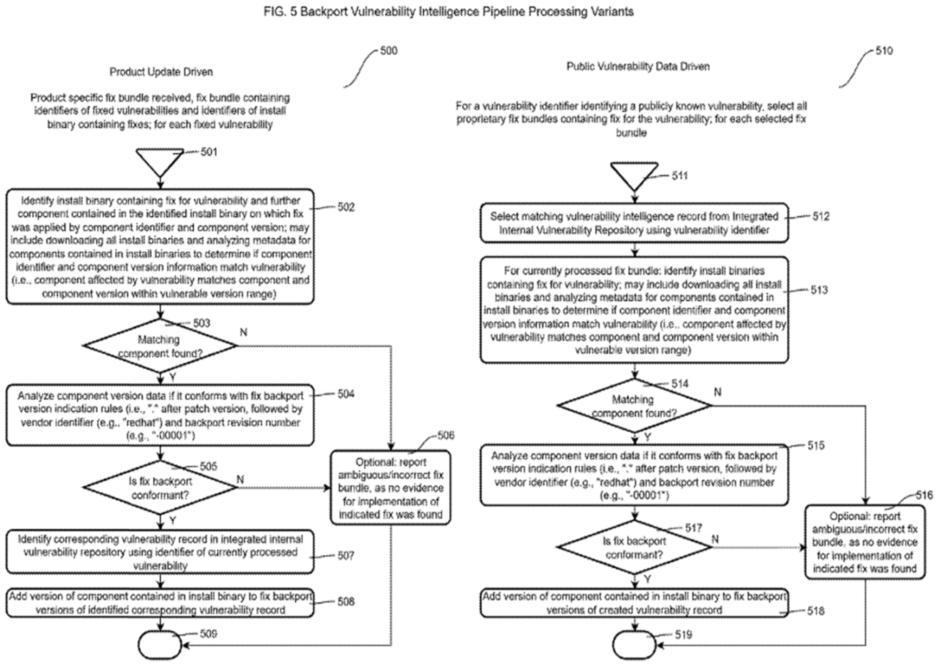

Coming now to **FIG. 5,** which provides flowcharts related to processes performed by the two vulnerability intelligence data ingest pipelines described in FIGs. 4A and 4B, where flowchart 500 is directed to the product update/maintenance-oriented pipeline variant shown in FIG. 4A and flowchart 510 is directed to the "onboarding" phase for the support of new product vendors/products by a security status monitoring system 150.

Flowchart 500 starts with step 501, when a new product specific fix bundle 423 is received, where the fix bundle contains identifiers for one or more fixed vulnerabilities and identifiers for one or more install binaries containing fixes for these vulnerabilities. The process described in the flowchart is executed for each contained vulnerability identifier.

Following step 502 is directed to the identification of the component on which the fix for the vulnerability identified by the currently processed vulnerability identifier is applied. Result of step 502 is the component identifier and the component version of the fixed component, if such a component exists.

Step 502 may include downloading all install binaries referred by the fix bundle (those install binaries may be downloaded separately, or if the vendor provides bulk downloading, in bulked fashion; already downloaded install binaries may be kept locally until all vulnerabilities referred by the fix bundle are processed). Downloaded install binaries may be analyzed to identify contained components, to identify, access and analyze metadata describing those components (this may include, for install binaries referred by a fix bundle, also downloading and analyzing corresponding install binaries also containing source code of contained components if the referred install binaries do not contain the required metadata), to extract component identifier and component version data for those components. Step 502 may then fetch detail data for the vulnerability identified by the currently processed vulnerability identifier, either in form of a public vulnerability record like a CVE or in form of an internally stored vulnerability intelligence record 411. The extracted component identifier and component version data may then be compared with affected component identifier (i.e., 414) and vulnerable version range (i.e., 415) of the fetched vulnerability detail data to determine whether the extracted component identifier matches the affected component identifier and the extracted component version falls into the vulnerable version range of the vulnerability.

Following decision step 503 continues the process with step 505, which indicates an ambiguous/incorrect fix bundle if no matching component (i.e., component identifier matches affected component and component version falls into vulnerable version range) was found, as this indicates that no actual fix was found for the vulnerability that is listed in the fix bundle. The process then ends with step 508.

If otherwise a matching component is found, which would be identified as affected by the vulnerability if data about backported vulnerability fixes is not considered, the process continues with step 504. Step 504 analyses the extracted component version data to determine whether it is conformant with a backport versioning scheme used by the provider of the fix bundle. Step 504 may, e.g., determine whether the version information contains a vendor identifier and a backport revision number formatted according to a vendor specific backport versioning scheme. Step 504 may also perform the process described in FIG. 3 to either create a structured version record containing fix backport version data 308 if the extracted version data follows a backport versioning scheme and is therefore a valid backport version or a structured version record not containing fix backport version data 308 if the extraction version information does not follow a backport versioning scheme. In addition to the processing described in FIG. 3, step 504 may use an identifier for the vendor that provided the fix bundle and select or filter only analysis rule records 321 having a vendor identifier 322 matching the identifier of the vendor that provided the fix bundle. It should be noted that the vendor identifier 322 of analysis rule records

may be structured into two parts. One vendor identifier part, which may be used to map analysis rule records to different vendors and one vendor specific backport version identifier part, which may be used to identify version strings that represent component or library variants containing backported vulnerability fixes. As an example for the software product provider RedHat, the vendor identifier part may be set to "RedHat", to identify analysis rule records that should be applied for the analysis of fix bundles provided by this vendor, and the vendor specific backport version identifier part may be set to "redhat" to identify version strings that contain this vendor specific marker or tag for its vendor specific backport version identifier. For the RedHat example those two different parts of the vendor identifier 322 only differ in casing of some characters, but it should be noted that those identifier parts may contain completely different strings, depending on conventions applied by a software vendor.

Following decision step 505 continues the process with step 506, if the extracted version data is not conformant to a backport versioning scheme used by the provider of the fix bundle to indicate an incorrect fix bundle.

Otherwise, the process continues with step 507, which queries the integrated internal vulnerability repository 410 for a vulnerability intelligence record 411 with a vulnerability identifier 412 matching the currently processed vulnerability identifier. Following step 508 then adds the extracted version data to the fix backport versions section 416 of the vulnerability intelligence record 411 retrieved by step 507. The process then ends with step 509.

Coming now to flowchart 510, which describes the processing performed by the pipeline variant shown in FIG. 4B, which is directed to the "onboarding" of a new product vendor or product. The process starts with step 511, when a vulnerability identifier for a publicly known vulnerability is received, for which an enrichment with vendor specific fix backport data is desired, and the fix bundle repository of the vendor was queried for fix bundles containing a fix for the vulnerability via an appropriate interface provided by the vendor (see description of element 472 in FIG. 4B). The process is executed for all returned fix bundles. Following step 512 then selects the vulnerability intelligence record 411 with a vulnerability identifier 412 matching the received vulnerability identifier from the integrated internal vulnerability repository 410. Step 513 then identifies, for the currently processed fix bundle, components contained in the install bundles that are referred to by the fix bundle that contain a fix for the vulnerability identified by the received vulnerability identifier. Step 513 may perform the same activities as already described for step 502 of flowchart 500 to identify those components that match the received vulnerability.

Following decision step 514 continues with step 516 if no component matching the received vulnerability was identified, which notifies an ambiguous/incorrect fix bundle, as no evidence was found that the vulnerability was fixed by the fix bundle. The process afterwards ends with step 519.

If otherwise a matching component is found, the process continues with step 515, which determines whether the version data of the component is conformant to a fix backport versioning scheme used by the product vendor. Step 515 may perform the same activities as already described for step 504 of flowchart 500. Following decision step 517 continues with step 516 if the version is not conformant with a vendor specific versioning scheme for backported vulnerability fixes to report an inconsistency, and with step 518 if the version is conformant. Step 518 adds the component version to the fix backport versions section 416 of the vulnerability intelligence record 411 selected by step 512. The process then ends with step 519.

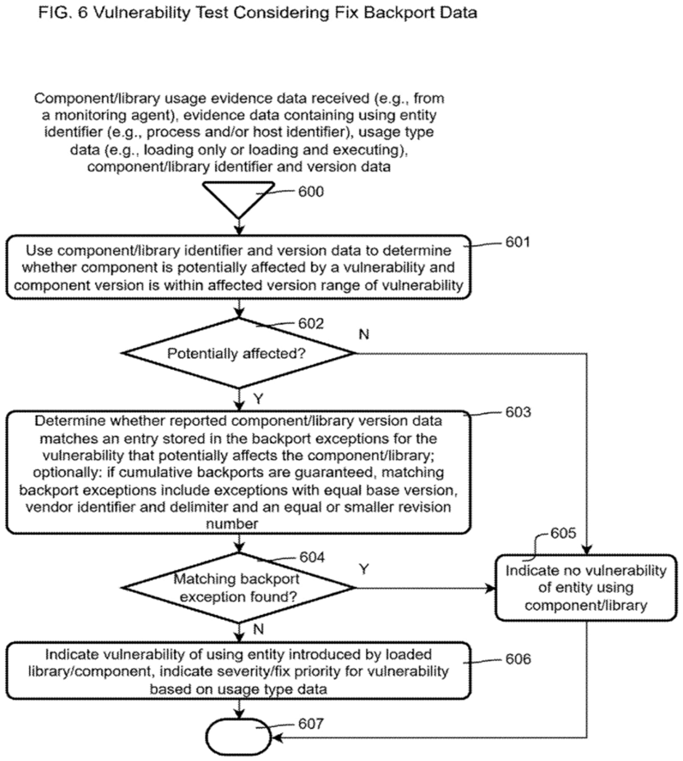

Coming now to **FIG. 6,** which describes the analysis process performed by a vulnerability analyzer 480 on receipt of a library loading/usage evidence record 481.

The process starts with step 600, when a library loading/usage evidence data record is received form a monitoring entity, like an agent deployed to a monitored environment.

Following step 601 then uses the component identifier 483 and the component version 484 contained in the received record to query the internal integrated vulnerability repository 410 for a vulnerability intelligence record 411 with matching component identifier 414 and a vulnerable version range definition 415 into which the received component version falls.

If a matching vulnerability intelligence record 411 is found, then the loaded/used component or library is potentially affected by the vulnerability described by the fetched vulnerability intelligence record 411.

If no matching vulnerability intelligence record is found, then following decision step 602 continues the process with step 605, which indicates that no vulnerability was detected and the process ends with step 607. In some variant embodiments step 605 may be omitted to avoid unnecessary notifications.

If otherwise a matching vulnerability intelligence record was found, the process continues with step 603, which queries the fix backport versions section 416 of the matching vulnerability intelligence record if it contains the received component version 484.

For vendors which guarantee cumulative fixes, which means that a fix with fix revision number n+1 contains also all fixes that are contained in fix with revision number n, step 603 may also include, if no full match is found in the fix backport versions section 416, to search for version entries in the fix backport versions section 416 that are equal to the received version, except to the backport revision number. If a version entry is found in the fix backport versions section that has a smaller fix backport revision number than the received version and is otherwise equal to the received version, then step 603 may also indicate that a matching backport version was found. If no cumulative fixes are guaranteed, then an exact

match of are reported component version and a version indicating a backported vulnerability fix is required.

Following decision step continues the process with step 605 if a matching backport version was found in the fix backport versions section 416, which either notifies that no vulnerability was found or issues no notification at all, and with step 606 if no matching backport version was found.

Step 606 indicates that the entity (e.g. process running on an operating system to execute code) identified by the loading/using entity identifier 482 of the received library loading/usage evidence record 481 is loading the component 483 in the version 484 notified by the evidence record, and that this component in this version is affected by the vulnerability described by the vulnerability intelligence record 411 queried by step 601. The process then ends with step 607.

Data describing the vulnerability status of components, including vulnerable version ranges and version data for backported vulnerability fixes extracted from vendor specific update bundles, as integrated and aggregated in the integrated internal vulnerability repository, may also be referred to as update data, and data describing the actual loading or usage of software components or libraries within a monitored environment, provided e.g., from agents deployed to those environments in form of library loading/usage evidence data records, may also be referred to as usage data.

The techniques described herein may be implemented by one or more computer programs executed by one or more processors. The computer programs include processor-executable instructions that are stored on a non-transitory tangible computer readable medium. The computer programs may also include stored data. Non-limiting examples of the non-transitory tangible computer readable medium are nonvolatile memory, magnetic storage, and optical storage.

Some portions of the above description present the techniques described herein in terms of algorithms and symbolic representations of operations on information. These algorithmic descriptions and representations are the means used by those skilled in the data processing arts to most effectively convey the substance of their work to others skilled in the art. These operations, while described functionally or logically, are understood to be implemented by computer programs. Furthermore, it has also proven convenient at times to refer to these arrangements of operations as modules or by functional names, without loss of generality.

Unless specifically stated otherwise as apparent from the above discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system memories or registers or other such information storage, transmission or display devices.

Certain aspects of the described techniques include process steps and instructions described herein in the form of an algorithm. It should be noted that the described process steps and instructions could be embodied in software, firmware or hardware, and when embodied in software, could be downloaded to reside on and be operated from different platforms used by real time network operating systems.

The present disclosure also relates to an apparatus for performing the operations herein. This apparatus may be specially constructed for the required purposes, or it may comprise a computer selectively activated or reconfigured by a computer program stored on a computer readable medium that can be accessed by the computer. Such a computer program may be stored in a tangible computer readable storage medium, such as, but is not limited to, any type of disk including floppy disks, optical disks, CD-ROMs, magnetic-optical disks, read-only memories (ROMs), random access memories (RAMs), EPROMs, EEPROMs, magnetic or optical cards, application specific integrated circuits (ASICs), or any type of media suitable for storing electronic instructions, and each coupled to a computer system bus. Furthermore, the computers referred to in the specification may include a single processor or may be architectures employing multiple processor designs for increased computing capability.

The algorithms and operations presented herein are not inherently related to any particular computer or other apparatus. Various systems may also be used with programs in accordance with the teachings herein, or it may prove convenient to construct more specialized apparatuses to perform the required method steps. The required structure for a variety of these systems will be apparent to those of skill in the art, along with equivalent variations. In addition, the present disclosure is not described with reference to any particular programming language. It is appreciated that a variety of programming languages may be used to implement the teachings of the present disclosure as described herein.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A computer-implemented method for identifying software components affected by a vulnerability, comprising:

- receiving, by a computer processor, a listing of publicly known vulnerabilities from a vulnerability database, where each entry in the listing of publicly known vulnerabilities identifies a known vulnerability, identifies a software component affected by the known vulnerability and identifies a range of versions of the software component affected by the known vulnerability;
- creating an integrated repository of vulnerabilities from the listing of publicly known vulnerabilities;
- receiving, by the computer processor, update data for a computer system, where the update data includes a listing of fixed vulnerabilities fixed by an update and a listing of updated software components, where each entry in the listing of updated software components identifies an updated software component and a version for the updated software component;
- for each updated software component in the listing of updated software components, determining, by the computer processor, whether a given updated software component resides in the listing of publicly known vulnerabilities and updating a listing of fixed versions for the given software component in the integrated repository of vulnerabilities, where the updating of the listing of fixed versions is in response to the given update software component residing in the listing of publicly known vulnerabilities;
- receiving, by the computer processor, usage data for a particular software component installed on the computer system, where the usage data includes an identifier for the particular software component and a version for the particular software component;
- determining, by the computer processor, whether the particular software component is affected by a vulnerability using the integrated repository of vulnerabilities; and
- reporting, by the computer processor, a vulnerability for the particular software component in response to the version for the particular software component falls in the range of versions of the software component affected by the known vulnerability but is absent from the listing of fixed versions for the given software component in the integrated repository of vulnerabilities.

**2.** The method of claim 1 further comprises reporting the vulnerability for the particular software component has been fixed in response to the version of the particular software component falling the range of versions of the software component affected by the known vulnerability and the version of the particular software component resides on the listing of fixed version for the given software component in the integrated repository of vulnerabilities.

**3.** The method of claim 1 or 2 further comprises receiving, by the computer processor, install binaries for updating the computer system; and extracting, by the computer processor, the update data from the install binaries.

**4.** The method of any one of the preceding claims further comprises receiving, by the computer processor, a software package for installation on a computer system; and extracting, by the computer processor, the update data for a particular software component from the software package.

**5.** The method of any one of the preceding claims, wherein determining whether a given updated software component resides in the listing of publicly known vulnerabilities includes creating a mapping between fixed vulnerabilities in the listing of vulnerabilities and updated software components in the listing of updated software components.

**6.** The method of any one of the preceding claims further comprises filtering the listing of updated software components to include only updated software components that fixes a vulnerability, wherein the filtering of the listing of updated software components occurs prior to determining whether a given update software component resides in the listing of publicly known vulnerabilities.

**7.** The method of any one of the preceding claims, wherein the version for the particular software component includes a major version, a minor version and a patch version each separated by a delimiter, and wherein each entry in the listing of fixed versions of software components includes a major version, a minor version and a patch version each separated by a delimiter.

**8.** The method of claim 7, wherein receiving update data for a computer system includes retrieving a version extraction rule from a rule repository and extracting a base version, a vendor identifier, and a fix revision number for the particular software component in accordance with the version extraction rule, where the version extraction rule is retrieved according to an identifier for software vendor of the updated software component, and wherein reporting a vulnerability for the particular software component further comprises identifying a fixed version for which an extracted base version and a vendor identifier match the extracted base version and the vendor identifier of the version of the particular software component; and indicating that the version of the particular software component as not absent in response to the extracted fix revision number from the fixed version being smaller than the extracted fix revision

number from the version of the particular software component.

**9.** A computer-implemented method for identifying software components affected by a vulnerability, comprising:

- receiving, by a computer processor, an entry for a particular vulnerability from a vulnerability database, where the entry identifies a known vulnerability, identifies a software component affected by the known vulnerability and identifies a range of versions of the software component affected by the known vulnerability;
- retrieving, by the computer processor, one or more fix bundles from a fix bundle repository using an identifier for the particular vulnerability, where each fix bundle in the one or more fix bundles fixes the particular vulnerability and includes a listing of fixed vulnerabilities fixed by an update and a listing of updated software components, wherein each entry in the listing of updated software components identifies an updated software component and a version for the updated software component;
- for each of the one or more fix bundles, creating, by the computer processor, a mapping between the particular vulnerability in the listing of vulnerabilities and updated software components in the listing of updated software components;
- for each updated software component mapped to the particular vulnerability, updating an integrated repository of vulnerabilities using the mapping, where each entry in the integrated repository of vulnerabilities identifies a known vulnerability, identifies a software component affected by the known vulnerability, identifies a range of versions of the software component affected by the known vulnerability, and identifies fixed versions of the software component;
- receiving, by the computer processor, usage data for a particular software component installed on the computer system, where the usage data includes an identifier for the particular software component and a version for the particular software component;
- determining, by the computer processor, whether the particular software component is affected by a vulnerability using the integrated repository of vulnerabilities; and
- reporting, by the computer processor, a vulnerability for the particular software component in response to the version for the particular software component falls in the range of versions of the software component affected by the known vulnerability but is absent from the listing of fixed versions for the given software component in the integrated repository of vulnerabilities.

**10.** The method of claim 9 further comprises reporting the vulnerability for the particular software component has been fixed in response to the version of the particular software component falling the range of versions of the software component affected by the known vulnerability and the version of the particular software component resides on the listing of fixed version for the given software component in the integrated repository of vulnerabilities.

**11.** The method of claim 9 or 10, wherein updating the integrated repository of vulnerabilities includes querying the integrated repository of vulnerabilities for records matching the particular vulnerability and a given updated software component; creating a new record in the integrated repository of vulnerabilities in absence of records matching the particular vulnerability and a given updated software component; and updating a given record in the integrated repository of vulnerabilities in response to the given record matching the particular vulnerability and a given updated software component

**12.** The method of any one of claims 9 to 11 further comprises receiving, by the computer processor, a software package for installation on a computer system; and extracting, by the computer processor, the update data for a particular software component from the software package.

**13.** The method of any one of claims 9 to 12 further comprises filtering the listing of updated software components to include only updated software components that fixes a vulnerability, wherein the filtering of the listing of updated software components occurs prior to creating a mapping.

**14.** The method of any one of claims 9 to 13, wherein the version for the updated software component includes a major version, a minor version and a patch version each separated by a delimiter, and wherein each entry in the listing of fixed versions of software components includes a major version, a minor version and a patch version each separated by a delimiter.

**15.** The method of claim 14, wherein receiving update data for a computer system includes retrieving a version extraction rule from a rule repository and extracting a base version, a vendor identifier, and a fix revision number for the updated software component in accordance with the version extraction rule, where the version extraction rule is retrieved

according to an identified for software vendor of the updated software component, and wherein reporting a vulnerability for the particular software component further comprises identifying a fixed version for which an extracted base version and a vendor identifier match the extracted base version and the vendor identifier of the version of the particular software component; and indicating that the version of the particular software component as not absent in response to the extracted fix revision number from the fixed version being smaller than the extracted fix revision number from the version of the particular software component.

FIG. 1A System Overview - Prior Art
Component Developer
100
Component Maintenance Stream
101
Component Update
ID/Name
Version
105
106
107
Vulnerability fixing (intentionally)
102
Component Update
ID/Name
Version
105
106
107
Vulnerability introducing (unintentionally)
103
Component Repository
Component
ID/Name
Version
106
107
108
110
Vulnerability Data Provider
111
Analyzes component version updates, identifies vulnerabilities and affected version ranges, creates corresponding vulnerability records
112
Public Vulnerability Repository
Vulnerability Record
ID/Name
Affected Component Id
Affected Version Range
114
115
116
113
Receive vulnerability intelligence data
151
150
Security Status Monitoring system
153
154
155
Vulnerability reports including false positives due to missing backport intelligence data
Vulnerability reports
122
1) Selects and fetches required components
123
2) Identifies vulnerabilities of selected components
120
Product Vendor/Product Update Bundle Provider
Update Bundle Provider
121
124
3) Backports fixes for identified vulnerabilities, creates update bundle
152
Performs vulnerability analysis based on public vulnerability data alone
Update Bundle
Bundle Id
Target Products
Product ID
Fixed Vulnerabilities
Vulnerability ID
Contained Components
Component Reference
ID/Name
Version + opt. Backport Fix Indicator
125
126
127
128
129
130
131
133
134
132
140
Receipt and installation of update bundle
141
Monitored System based on Product receiving Update Bundles

FIG. 1B System Overview - Using Fix Backport Intelligence Data
100
Component Developer
Component Maintenance Stream
101
102
Component Update
ID/Name
Version
105
106
107
Vulnerability fixing (intentionally)
Component Update
ID/Name
Version
105
106
107
Vulnerability introducing (unintentionally)
103
Component Repository
Component
ID/Name
Version
106
107
108
110
Vulnerability Data Provider
111
Analyzes component version updates, identifies vulnerabilities and affected version ranges, creates corresponding vulnerability records
112
Public Vulnerability Repository
Vulnerability
ID/Name
Affected Component Id
Affected Version Range
113
114
115
116
Receive public vulnerability intelligence data
151
160
Security Status Monitoring system
163
Vulnerability reports considering backport intelligence data
164
Vulnerability reports
1) Selects and fetches required components
122
123
2) Identifies vulnerabilities of selected
120
Product Vendor/Product Update Bundle Provider
Update Bundle Provider
121
124
3) Backports fixes for identified vulnerabilities, creates update bundle
Update Bundle
Bundle Id
Target Products
Product ID
Fixed Vulnerabilities
Vulnerability ID
Contained Components
Component Reference
ID/Name
Version + opt. Backport Fix Indicator
125
126
127
128
129
130
131
132
133
134
161
Receive update bundles, extract vulnerability backport data and integrate with public vulnerability data
162
Performs vulnerability analysis based on integrated public and backport vulnerability data
140
Receipt and installation of update bundle
141
Monitored System based on Product receiving Update Bundles

FIG. 2A Orthogonality of Component Maintenance/Development Versions and Product Backport Versions
Backport version dimension
Component maintenance/development version dimension
200
201
V1
V2
V3
V4
V5
V6
V4BP1
V4BP2
202
203
204
205
206
207
208
209
210
211
212
213
220
221
222
223
224
Update
Update, introducing vulnerability
Selected for product release
Vulnerability detected
Update, fixing vulnerability
Backport base version
Isolated fix code, without intermediate updates
Product internal backport revision
FIG. 2B Implementation based on Semantic Versioning
230
231
232
233
234
235
236
237
238
239
Major version (numeric)
"."
Minor version (numeric)
"."
Patch version (numeric)
"-" | "+"
Pre-release/build identifier (alpha numeric, starting with non-digit)
Versioning information for component release stream
Versioning information for intermediate/internal version of component release stream (optional)
Component Release Version Variants
240
241
242
243
244
245
246
247
248
249
250
251
Major version (numeric)
"."
Minor version (numeric)
"."
Patch version (numeric)
"."
Vendor/product identifier (e.g., "redhat")
Delimiter (e.g., "-")
Backport revision number (e.g., "00003")
Backport base version number
Backport version information
Backport Version Variant - Semantic Versioning "Major", "Minor" and "Patch" version still recognized, no clash with intermediate/internal versions due to "." delimiter before backport version information instead of "-" | "+".

FIG. 3 Processing of Version Data
Block Diagram Version Data Analysis Module
300
Vendor Specific Version Analysis Rule Repository
320
Analysis Rule Record
Vendor Identifier
Base Version Extraction Rule
Fix Backport Identifier Analysis Rule
321
322
323
324
Version String (formatted according to semantic versioning scheme or variant/derivate thereof)
301
Receive version string for analysis
302
Fetch analysis rules
304
Version Data Analyzer
303
Provide version string analysis result
305
Structured Version Record
306
Base Version Data
307
Fix Backport Version data (optional/not set if no fix backport version)
308
Vendor Identifier
309
Backport Revision Data (optional)
310
Flow Chart Version Data Analysis
330
Version string received, either from vendor fix backport information, or from agent reporting component/library usage
331
Select first analysis rule record from vendor specific version analysis rule repository as current analysis rule record
332
Determine if received version string matches current analysis rule (e.g., by determining if version string includes vendor identifier)
333
Select next analysis rule as current analysis rule
336
Version string matches analysis current rule?
334
N
Y
Next analysis rule available?
335
Extract base version data (e.g., by selecting portion of version string before last ".")
337
Extract fix backport identification data (e.g., by extracting vendor identifier, backport revision data, etc.)
338
Provide structured version record containing only base version data and no fix backport version data
340
Provide structured version record containing base and fix backport version data
339
341

FIG 4A Integrated Vulnerability Identification Pipeline - Product Update Driven
400
112
Public Vulnerability Database
401
1a
Base Vulnerability Ingest
Extract vulnerability identifier and descriptive data, affected product/component/library identifier, and affected version range
410
Integrated Internal Vulnerability Repository
Vulnerability Intelligence Record
Vulnerability Identifier
Component Identifier
Vulnerable Version Range(s)
Range Definition (e.g., start/end version)
Fix Backport Versions (e.g., 0-n backport versions)
411
412
413
414
415
416
420
421
Proprietary Fix Bundle Repository
422
1b
Fix Bundle Ingest
Fix Bundle
Bundle Identifier
Fixed Vulnerabilities
Vulnerabiltiy Identifier
Updated Install Binaries
Installable Binary Identifier
423
424
425
426
427
428
430
2b
Component Identification
Fix Bundle Intermediate Version 1
Bundle Identifier
Fixed Vulnerabilities
Vulnerabiltiy Identifier
Updated Components
Component Identifier
(Backport) Version
431
432
433
434
435
436
437
438
440
3b
Fix Backport Filtering
Fix Bundle Intermediate Version 1
Bundle Identifier
Fixed Vulnerabilities
Vulnerabiltiy Identifier
Updated Components
Component Identifier
Backport Version
441
442
443
444
445
446
447
448
450
4b
Component/ Vulnerability Mapping
Fix Bundle Intermediate Version 2
Bundle Identifier
Vulnerability/Fix Mapping List
Vulnerability/Fix Mapping
Vulnerability Identifier
Component Identifier
Backport Version
451
452
453
454
455
456
457
460
5b
Merge into Integrated Vulnerability Intelligence Data
For each vulnerability/fix mapping, use vulnerability identifier and backport base version to identify corresponding vulnerability intelligence record and add backport exception for backport version

FIG 4B Integrated Vulnerability Identification Pipeline - Public Vulnerability Data Driven
112 or 410
Base Vulnerability Database
470
1
Base Vulnerability Ingest/Selection
Extract vulnerability identifier and descriptive data, affected product/component/library identifier, and affected version range
471
2
Query Proprietary Fix Bundle Repository for Fix Bundles Containing Fixes for reported Vulnerabilities
Fix Bundle
Bundle Identifier
Fixed Vulnerabilities
Vulnerabiltiy Identifier
Updated Install Binaries
Installable Binary Identifier
423
472
421
Proprietary Fix Bundle Repository
472
3
Component Identification
Fix Bundle Intermediate Version 1
Bundle Identifier
Fixed Vulnerabilities
Vulnerabiltiy identifier
Updated Components
Component identifier
(Backport) Version
431
473
4
Fix Backport Filtering
Fix Bundle Intermediate Version 1
Bundle Identifier
Fixed Vulnerabilities
Vulnerabiltiy Identifier
Updated Components
Component Identifier
Backport Version
441
474
5
Component/ Vulnerability Fix Mapping
Fix Bundle Intermediate Version 2
Bundle Identifier
Component/Fix Mapping List
Component/Fix Mapping
Vulnerability Identifier
Component Identifier
Fix Backport Version
451
475
6
Create or update Vulnerability Intelligence Records including Fix Backport Intelligence
For each reported vulnerability use vulnerability identifier, component identifier and version range to create or update vulnerability intelligence record; use backport version data identified for component vulnerabilities to add backport version exceptions
410
Integrated Internal Vulnerability Repository
Vulnerability Intelligence Record
Vulnerability Identifier
Component Identifier
Vulnerable Version Range(s)
Range Definition (e.g., start/end version)
Fix Backport Versions (e.g., 0-n backport versions)
412
413
414
415
416
411

FIG 4C Integrated Vulnerability Identification Pipeline - Usage of Created Integrated Vulnerability Intelligence Data
410
Integrated Internal Vulnerability Repository
Vulnerability Intelligence Record
Vulnerability Identifier
Component Identifier
Vulnerable Version Range(s)
Range Definition (e.g., start/end version)
Fix Backport Versions (e.g., 0-n backport versions)
412
413
414
415
416
411
481
Library loading/usage evidence record
482
Loading/Using Entity Identifier
483
Component Identifier
484
Component Version
485
Extract base version and backport version data from component version data
486
Vulnerability Analyzer
480
Use base version and component identifier to select vulnerability record with matching component identifier and version range; use backport version data to check for existing backport exception
Indicate vulnerability of loading/using entity if component identifier and base version match vulnerability intelligence record and no fix backport version of vulnerability intelligence record matching reported version
487
Vulnerability status report
488
Loading/Using Entity Identifier
489
Component Identifier
490
Component Version
491
Vulnerability Identifer
492

FIG. 5 Backport Vulnerability Intelligence Pipeline Processing Variants
500
Product Update Driven
Product specific fix bundle received, fix bundle containing identifiers of fixed vulnerabilities and identifiers of install binary containing fixes; for each fixed vulnerability
501
Identify install binary containing fix for vulnerability and further component contained in the identified install binary on which fix was applied by component identifier and component version; may include downloading all install binaries and analyzing metadata for components contained in install binaries to determine if component identifier and component version information match vulnerability (i.e., component affected by vulnerability matches component and component version within vulnerable version range)
502
Matching component found?
503
N
Y
Analyze component version data if it conforms with fix backport version indication rules (i.e., "." after patch version, followed by vendor identifier (e.g., "redhat") and backport revision number (e.g., "-00001")
504
Is fix backport conformant?
505
N
Y
Optional: report ambiguous/incorrect fix bundle, as no evidence for implementation of indicated fix was found
506
Identify corresponding vulnerability record in integrated internal vulnerability repository using identifier of currently processed vulnerability
507
Add version of component contained in install binary to fix backport versions of identified corresponding vulnerability record
508
509
510
Public Vulnerability Data Driven
For a vulnerability identifier identifying a publicly known vulnerability, select all proprietary fix bundles containing fix for the vulnerability; for each selected fix bundle
511
Select matching vulnerability intelligence record from Integrated Internal Vulnerability Repository using vulnerability identifier
512
For currently processed fix bundle: identify install binaries containing fix for vulnerability; may include downloading all install binaries and analyzing metadata for components contained in install binaries to determine if component identifier and component version information match vulnerability (i.e., component affected by vulnerability matches component and component version within vulnerable version range)
513
Matching component found?
514
N
Y
Analyze component version data if it conforms with fix backport version indication rules (i.e., "." after patch version, followed by vendor identifier (e.g., "redhat") and backport revision number (e.g., "-00001")
515
Is fix backport conformant?
517
N
Y
Optional: report ambiguous/incorrect fix bundle, as no evidence for implementation of indicated fix was found
516
Add version of component contained in install binary to fix backport versions of created vulnerability record
518
519

FIG. 6 Vulnerability Test Considering Fix Backport Data

Component/library usage evidence data received (e.g., from a monitoring agent), evidence data containing using entity identifier (e.g., process and/or host identifier), usage type data (e.g., loading only or loading and executing), component/library identifier and version data
600
Use component/library identifier and version data to determine whether component is potentially affected by a vulnerability and component version is within affected version range of vulnerability
601
602
Potentially affected?
N
Y
Determine whether reported component/library version data matches an entry stored in the backport exceptions for the vulnerability that potentially affects the component/library; optionally: if cumulative backports are guaranteed, matching backport exceptions include exceptions with equal base version, vendor identifier and delimiter and an equal or smaller revision number
603
604
Matching backport exception found?
Y
N
605
Indicate no vulnerability of entity using component/library
Indicate vulnerability of using entity introduced by loaded library/component, indicate severity/fix priority for vulnerability based on usage type data
606
607

Europäisches
Patentamt
European
Patent Office
Office européen
des brevets

# EUROPEAN SEARCH REPORT

Application Number
EP 26 15 8093

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/204468 A1 (NICKOLOV PETER [US] ET AL) 25 June 2020 (2020-06-25)<br>* paragraphs [0032], [0033], [0048], [0143], [0146], [0176], [0326], [0327], [0390], [0404], [0770], [1050], [1243] * | 1-15 | INV.<br>G06F8/65<br>G06F21/57<br>H04L9/40 |
| A | TOULOUMIS KONSTANTINOS ET AL: "Vulnerabilities Manager, a platform for linking vulnerability data sources", 2021 IEEE INTERNATIONAL CONFERENCE ON BIG DATA (BIG DATA) IEEE, 15 December 2021 (2021-12-15), pages 2178-2184, XP034066079, DOI: 10.1109/BIGDATA52589.2021.9672026 [retrieved on 2022-01-05]<br>* the whole document * | 1-15 | |
| A | US 2020/242254 A1 (VELUR SHASHI [US] ET AL) 30 July 2020 (2020-07-30)<br>* the whole document * | 1-15 | TECHNICAL FIELDS SEARCHED (IPC) |
| A | US 2021/152588 A1 (CRUZ PRADEEP [US] ET AL) 20 May 2021 (2021-05-20)<br>* the whole document * | 1-15 | G06F<br>H04L |

The present search report has been drawn up for all claims

1

| Place of search | Date of completion of the search | Examiner |
|---|---|---|
| The Hague | 5 June 2026 | Pereira, Mafalda |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.....................................................................
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 26 15 8093

This annex lists the patent family members relating to the patent documents cited in the above-mentioned European search report. The members are as contained in the European Patent Office EDP file on
The European Patent Office is in no way liable for these particulars which are merely given for the purpose of information.

05-06-2026

| Patent document cited in search report | Publication date | Patent family member(s) | Publication date |
|---|---|---|---|
| US 2020204468 A1 | 25-06-2020 | CA 3019911 A1 | 02-02-2017 |
| | | US 2017034023 A1 | 02-02-2017 |
| | | US 2019097907 A1 | 28-03-2019 |
| | | US 2020204468 A1 | 25-06-2020 |
| | | WO 2017019684 A1 | 02-02-2017 |
| US 2020242254 A1 | 30-07-2020 | CN 111488578 A | 04-08-2020 |
| | | EP 3693874 A1 | 12-08-2020 |
| | | SG 10201912351Q A | 28-08-2020 |
| | | US 2020242254 A1 | 30-07-2020 |
| US 2021152588 A1 | 20-05-2021 | US 2021152588 A1 | 20-05-2021 |
| | | US 2023319096 A1 | 05-10-2023 |

EPO FORM P0459

For more details about this annex : see Official Journal of the European Patent Office, No. 12/82